# EUROPEAN PATENT APPLICATION

(11) **EP 4 542 987 A1**
(43) Date of publication of application: **23.04.2025**
(21) Application number: 24199236.1
(22) Date of filing: 09.09.2024
(51) Int. Cl.: H04N 19/105, H04N 19/463, H04N 19/517

(54) **SEPARABLE MOTION VECTOR PREDICTOR COMPONENTS IN VIDEO ENCODING**

(30) Priority: 19.10.2023 US 202363591701 P; 29.02.2024 US 202418591224
(71) Applicant: INTEL Corporation, Santa Clara, CA 95054 (US)
(72) Inventor: Mahdi, Nader, BC, Maple Ridge, V2X7G9 (CA)
(74) Representative: Samson & Partner Patentanwälte mbB

(57) **Abstract**

In the process of block-prediction in block-based video compression, a vector for translating a reference block to produce a predicted block is not encoded directly in an encoded bitstream. Rather, a residual vector, which is the difference between the vector and a selected vector predictor candidate, is encoded to achieve higher compression efficiency. A selected vector predictor candidate can have the smallest Euclidean distance to the vector to ensure the residual vector is small. For compressing video that has complex spatial and/or temporal characteristics, the selected vector predictor candidate may not result in the smallest residual vector. To address this concern, vector predictor candidates are selected separately for the horizontal component and the vertical component of the vector to obtain smaller residual vectors. An effective and efficient signaling scheme can be implemented to indicate whether the predictor is based on components from two different predictor candidates.

## Description

### Cross-reference to Related Applications

This non-provisional application claims priority to and/or receives benefit from provisional application, titled "SEPARABLE MOTION VECTOR PREDICTOR IN DIGITAL VIDEO CODING", serial no. 63/591,701, filed on October 19, 2023. The provisional application is hereby incorporated by reference in its entirety.

### Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Figure (FIG.) 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4A illustrates exemplary vector predictor candidates for a block, according to some embodiments of the disclosure.
FIG. 4B illustrates an exemplary indexed predictor table having indices that correspond to the exemplary vector predictor candidates shown in FIG. 4A, according to some embodiments of the disclosure.
FIG. 5 depicts a flow diagram of an exemplary method for encoding a block, according to some embodiments of the disclosure.
FIG. 6 depicts a flow diagram of an exemplary method for decoding a block, according to some embodiments of the disclosure.
FIG. 7 illustrates examples of motion vectors, according to some embodiments of the disclosure.
FIGS. 8A-E illustrate exemplary indexed predictor tables, according to some embodiments of the disclosure.
FIG. 9 illustrates an exemplary encoder, according to some embodiments of the disclosure.
FIG. 10 illustrates an exemplary decoder, according to some embodiments of the disclosure.
FIG. 11 depicts a flow diagram of an exemplary method for decoding an encoded bitstream, according to some embodiments of the disclosure.
FIG. 12 depicts a flow diagram of an exemplary method for encoding a video, according to some embodiments of the disclosure.
FIG. 13 depicts a block diagram of an exemplary computing device, according to some embodiments of the disclosure.

### Detailed Description

### Overview

Video coding or video compression is the process of compressing video data for storage, transmission, and playback. Video compression may involve taking a large amount of raw video data and applying one or more compression techniques to reduce the amount of data needed to represent the video while maintaining an acceptable level of visual quality. In some cases, video compression can offer efficient storage and transmission of video content over limited bandwidth networks.

A video includes one or more (temporal) sequences of video frames or frames. Frames have frame indices that indicate positions of the frames within the video, or within the one or more sequences. A frame may include an image, or a single still image. A frame may have millions of pixels. For example, a frame for an uncompressed 4K video may have a resolution of 3840x2160 pixels. Pixels may have luma/luminance and chroma/chrominance values. In video compression, a frame may be partitioned into blocks for block-based processing or block-based compression. Blocks may have sizes which are much smaller, such as 512x512 pixels, 256x256 pixels, 128x128 pixels, 64x64 pixels, 32x32 pixels, 16x16pixels, 8x8 pixels, 4x4 pixels, etc. A block may include a square or rectangular region of a frame.

Motion compensation and block-prediction are techniques used in block-based video coding standards to reduce redundancy between consecutive video frames or within a video frame. Motion compensation can be an effective tool for reducing temporal redundancy between video frames. Motion compensation may involve predicting a block in a current frame from a reference block in a previously encoded frame using a motion vector. The determined motion vector from the motion estimation process can be subtracted from an already encoded motion vector (e.g., a motion vector predictor candidate or a motion vector predictor) and (only) the residual motion vector is coded and signaled to the decoder. Block-prediction may be used to reduce spatial redundancy within a video frame. Block-prediction may involve predicting a block in a current frame from a reference block in the same frame using a vector. The determined vector can be subtracted from an already encoded vector (e.g., a vector predictor candidate, or a vector predictor) and (only) the residual vector is coded and signaled to the decoder. Both motion compensation between frames and block-prediction within a frame are referred to as block-prediction herein.

In the process of block-prediction, a vector for translating a reference block to produce a predicted block is not encoded directly in an encoded bitstream. Rather, a residual vector, which is the difference between the vector and a selected vector predictor candidate (or selected vector predictor), is encoded to achieve higher compression efficiency. A selected vector predictor candidate can have the smallest Euclidean distance to the vector to ensure the residual vector is small.

In some codecs, a single (motion) vector predictor corresponding to a vector of a processed block is employed in motion compensation, e.g., for both horizontal and vertical (motion) vector components. However, this approach may not be optimal in scenarios with intricate or non-uniform (motion) patterns. In some codecs, a single vector predictor corresponding to a vector of a processed block is employed in block-prediction, e.g., for both horizontal and vertical vector components. However, this approach may not be optimal in scenarios with intricate or non-uniform (spatial) patterns. For compressing video that has complex spatial and/or temporal characteristics, the selected, non-separable vector predictor candidate may not result in the smallest residual vector.

To address this concern, vector predictor candidates can be selected or chosen by an encoder independently and/or separately for the horizontal component and the vertical component of the vector to obtain smaller residual vectors. A more fine-grained approach involving separable prediction of motion vector components can be applied in motion vector prediction in video coding. The same fine-grained approach involving separable prediction of vector components can be applied to block-prediction in video encoding. Instead of relying on a single non-separable vector predictor for, e.g., both horizontal and vertical vector components, the approach allows the encoder to independently and/or separately select the best predictors for each component. Specifically, the approach may include separately selecting or choosing optimal predictors for horizontal and vertical vector components, which can further optimize compression efficiency, especially in scenarios with complex temporal and/or spatial patterns. Phrased differently, the approach may select the best predictor for the horizontal vector component and the best predictor for the vertical vector component. This fine-grained approach can improve the accuracy of vector prediction, resulting in smaller residual vectors and reduced bit rates for the same level of visual quality, especially in situations with intricate and challenging temporal and/or spatial patterns.

In some embodiments, instead of relying on a single (global or non-separable) predictor candidate for both components of the vector, the encoder can independently or separately choose the most suitable predictors for each component (e.g., the horizontal vector component and the vertical vector component), based on the specific temporal and/or spatial characteristics in a given block. These predictor components are not derived from the same or single motion vector predictor (spatial from the same frame as the current block or temporal from another reference frame) but instead are derived from two different motion vector predictors to form a composite predictor or a composite predictor candidate. It is possible to signal the use of a composite predictor candidate, e.g., the selections of different motion vector predictors in the encoded bitstream, to indicate the chosen horizontal and vertical predictor components to the decoder.

In some embodiments, an effective and efficient signaling scheme can be implemented to indicate the use of a composite predictor candidate that is based on components from two different predictor candidates. For signaling to the decoder a selection of a particular predictor for encoding a vector of a block, the encoder may have a number of bits usable to signal an index of an indexed predictor table that corresponds to a selected/chosen vector predictor candidate. The index predictor table may in some cases have one or more available spots or indices which can be used to signal one or more specific composite predictor candidates. The mapping of available spots/indices to specific composite predictor candidates can be algorithmically or systematically determined in the encoder and the decoder.

The technique of separately selecting horizontal and vertical (motion) vector predictors in video coding can address one or more technical challenges. Separable prediction of (motion) vector components can fundamentally improve compression efficiency by offering a more accurate and nuanced approach to (motion) vector prediction. Complex motion patterns, such as diagonal or non-uniform motion, often pose challenges for non-separable predictors, leading to suboptimal compression. Complex spatial patterns, such as screen content or gaming content, may pose challenges for non-separable predictors, leading to suboptimal compression. By separately choosing the best predictors for different components (e.g., horizontal and vertical components), the technique can adapt more effectively to these complex patterns, resulting in smaller (motion) residual vectors. Smaller residual vectors, in turn, can demand fewer bits for encoding and transmission, reducing bit rates and enhancing compression efficiency. This flexible adaptation to challenging temporal and/or spatial characteristics can provide a valuable trade-off between video quality and bandwidth usage, making it an effective and useful innovation for video coding standards and applications with bandwidth constraints or high-quality video delivery requirements.

A compressed bitstream that is encoded using this approach may have signaling and/or metadata that signals the use of separate horizonal and vertical (motion) vector predictors. The compressed bitstream may include one or more indices associated with the composite vector predictors. The compressed bitstream may include one or more syntax elements and/or one or more parameters (which may be specified or documented in a video codec standard or specification) to signal the use of composite vector predictors for a particular block, a particular frame, and/or a particular sequence of frames. At a decoder, the signaling and/or metadata (e.g., indices, syntax elements, parameters, etc.) may be read or interpreted to determine whether composite vector predictors are used and to determine the horizonal and vertical (motion) vector components corresponding to the composite vector predictor.

Some approaches for reducing the motion residual vector may include median prediction (e.g., in H.264 standard), and enhanced predictive coding techniques like advanced motion vector prediction (AMVP) (e.g., in H.265 standard). AMVP or similar techniques may refine motion vector predictions based on a list of candidate motion vectors. These techniques may help improve prediction accuracy for both motion vectors and residuals. While some approaches have contributed to increasing video compression efficiency, they rely on global, block-level, or non-separable predictors and lack the capability of more nuanced and flexible motion vector prediction.

Composite vector predictors can be used in any video codec that employs motion compensation in inter-frame prediction, or block-prediction in intra-frame prediction. Video codec standards may be used in a wide range of applications, including, e.g., video streaming, video conferencing, broadcasting, and more. Some examples of video codec standards that can adopt the use of composite vector predictors include, AVC (Advanced Video Coding), HEVC (High Efficiency Video Coding), and AV1 (AOMedia Video 1), and VVC (Versatile Video Coding). AVC, also known as "ITU-T H.264 (08/21)", was approved 2021-08-22. HEVC, also known as "H.265 ITU-T H.265 (V9) (09/2023)", was approved 2023-09-13. AV1 is a video coding codec designed for video transmissions over the Internet. "AV1 Bitstream & Decoding Process Specification" version 1.1.1 with Errata was last modified on 2019-01-18. VVC, also known as "ITU-T H.266 (V3) (09/2023)", was approved 2023-09-29.

The approach can be incorporated into hardware and/or software implementing video encoding standards that have block-prediction and encoding of residual vectors. The approach can be incorporated into hardware and/or software that support the use of vector predictor candidates to encode vectors, e.g., in the motion compensation process or block-prediction, such as SVT-AV1 (Scalable Video Technology AV1 Encoder), SVT-VP9 (Scalable Video Technology VP9 Encoder) and SVT-HEVC (Scalable Video Technology for HEVC Encoder). The approach can enable more effective motion compensation by selecting better vector predictor candidates and reducing the magnitude of residual vectors to be encoded in the bitstream. The approach can deal with compression of video having complex characteristics, achieve high compression efficiency, and achieve higher video quality.

While some examples herein relate to motion compensation in inter-frame prediction, it is envisioned by the disclosure that the teachings of using composite vector predictor candidates or composite vector predictors may be applied for block-prediction in intra-frame prediction as well.

### Video compression

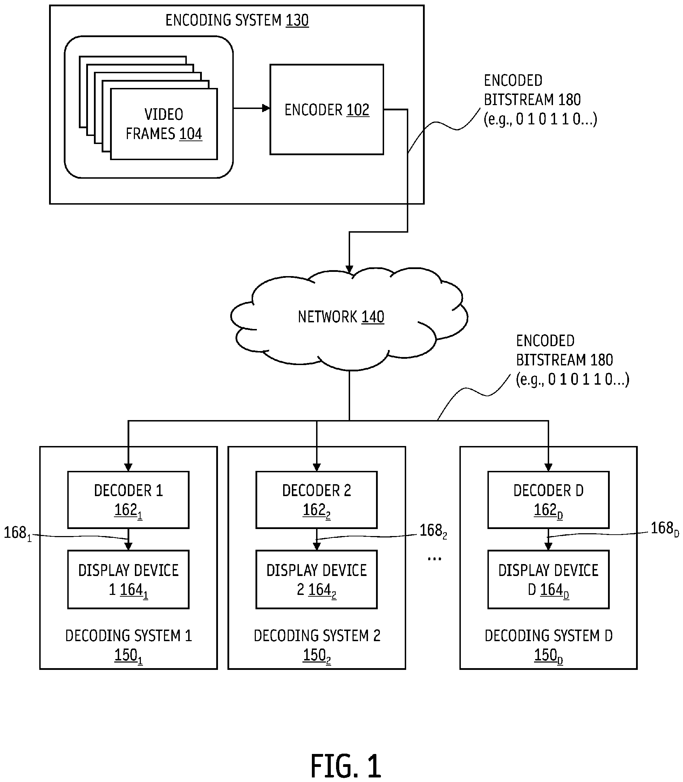

FIG. 1 illustrates encoding system 130 and one or more decoding systems 150_{1...D}, according to some embodiments of the disclosure.

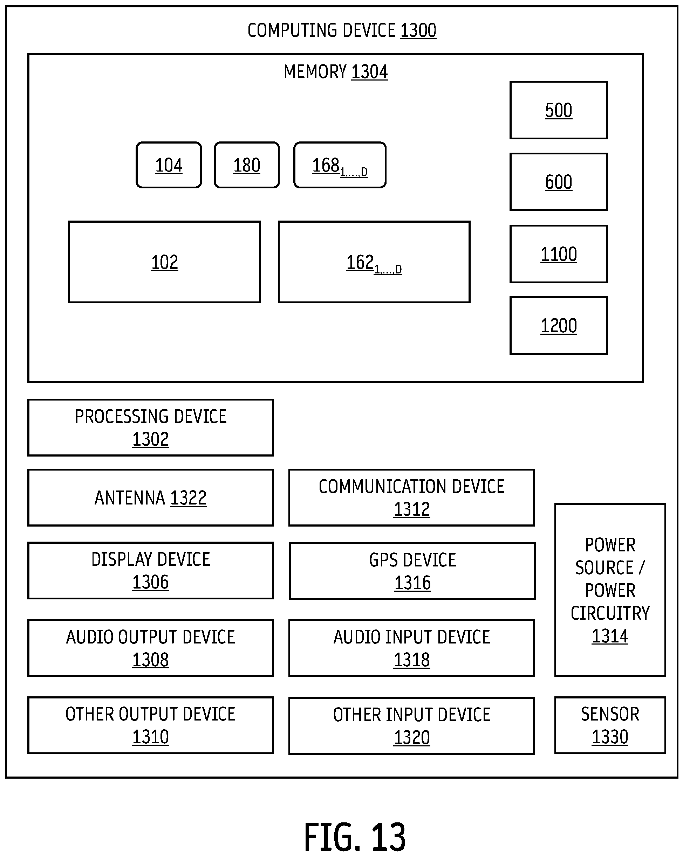

Encoding system 130 may be implemented on computing device 1300 of FIG. 13. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer screen content, video conferencing content, live event broadcast content, sports content, a surveillance video, a video shot using a mobile computing device (e.g., a smartphone), etc. In some cases, video may include a mix or combination of different types of video.

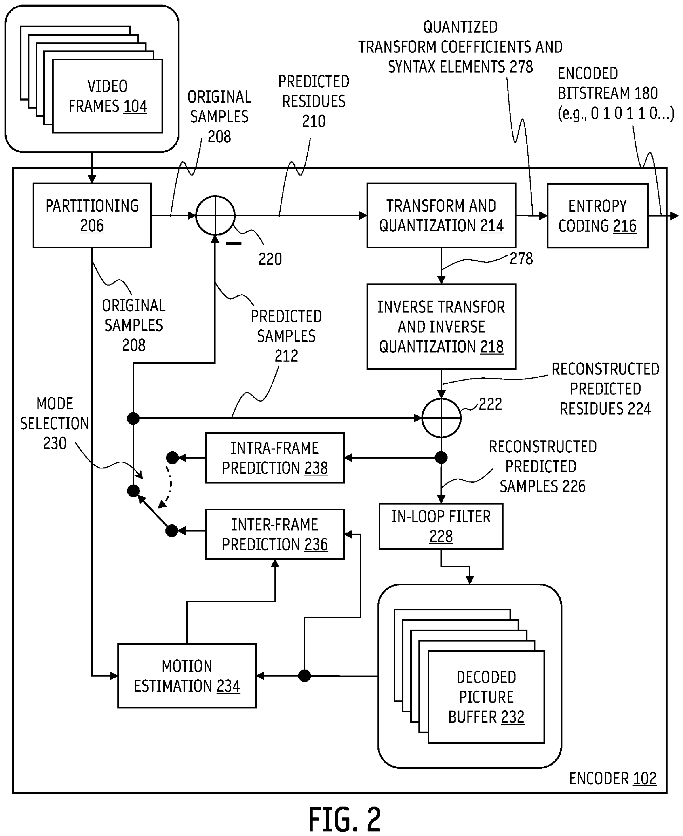

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may include packets, where encoded video data and signaling information may be packetized. One exemplary format is the Open Bitstream Unit (OBU), which is used in AV1 encoded bitstreams. An OBU may include a header and a payload. The header can include information about the OBU, such as information that indicates the type of OBU. Examples of OBU types may include sequence header OBU, frame header OBU, metadata OBU, temporal delimiter OBU, and tile group OBU. Payloads in OBUs may carry quantized transform coefficients and syntax elements that may be used in the decoder to properly decode the encoded video data to regenerate video frames.

Encoded bitstream 180 may be transmitted to one or more decoding systems 150_{1...D}, via network 140. Network 140 may be the Internet. Network 140 may include one or more of: cellular data networks, wireless data networks, wired data networks, cable Internet networks, fiber optic networks, satellite Internet networks, etc.

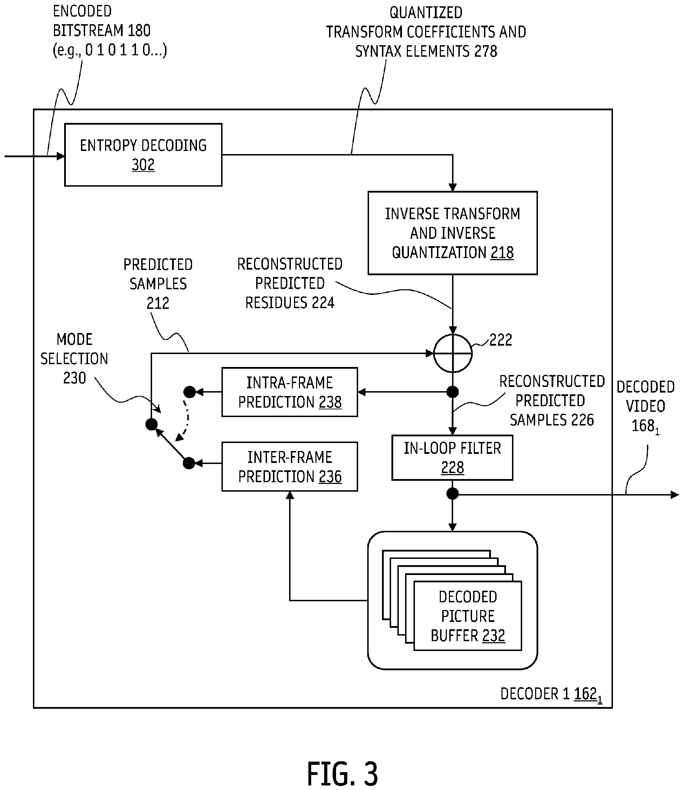

D number of decoding systems 150_{1...D} are illustrated. At least one of the decoding systems 150_{1...D} may be implemented on computing device 1300 of FIG. 13. Examples of systems 150_{1...D} may include personal computers, mobile computing devices, gaming devices, augmented reality devices, mixed reality devices, virtual reality devices, televisions, etc. Each one of decoding systems 150_{1...D} may perform the process of decoding in video compression. Each one of decoding systems 150_{1...D} may include a decoder (e.g., decoder 1...D 162_{1...D}), and one or more display devices (e.g., display device 1...D 164_{1...D}). An exemplary implementation of a decoder, e.g., decoder 1 162₁, is illustrated in FIG. 3.

For example, decoding system 1 150₁, may include decoder 1 162₁ and a display device 1 164₁. Decoder 1 162₁ may implement a decoding process of video compression. Decoder 1 162₁ may receive encoded bitstream 180 and produce decoded video 168₁. Decoded video 168₁ may include a series of video frames, which may be a version or reconstructed version of video frames 104 encoded by encoding system 130. Display device 1 164₁ may output the decoded video 168₁ for display to one or more human viewers or users of decoding system 1 150₁.

For example, decoding system 2 150₂, may include decoder 2 162₂ and a display device 2 164₂. Decoder 2 162₂ may implement a decoding process of video compression. Decoder 2 162₂ may receive encoded bitstream 180 and produce decoded video 168₂. Decoded video 168₂ may include a series of video frames, which may be a version or reconstructed version of video frames 104 encoded by encoding system 130. Display device 2 164₂ may output the decoded video 168₂ for display to one or more human viewers or users of decoding system 2 150₂.

For example, decoding system D 150_{D}, may include decoder D 162_{D} and a display device D 164_{D}. Decoder D 162_{D} may implement a decoding process of video compression. Decoder D 162_{D} may receive encoded bitstream 180 and produce decoded video 168_{D}. Decoded video 168_{D} may include a series of video frames, which may be a version or reconstructed version of video frames 104 encoded by encoding system 130. Display device D 164_{D} may output the decoded video 168_{D} for display to one or more human viewers or users of decoding system D 150_{D}.

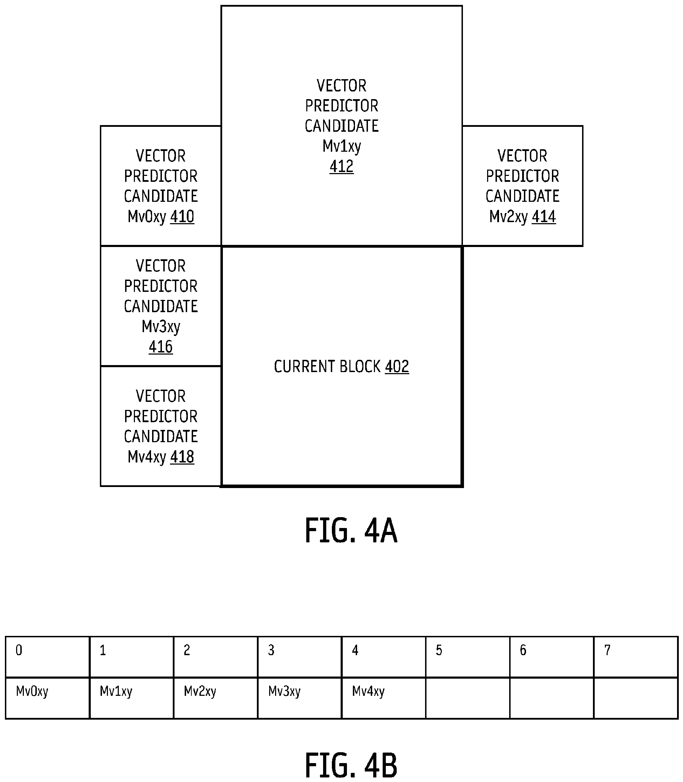

As discussed herein, encoder 102 may be modified to implement operations as illustrated in FIGS. Decoders such as decoder 1...D 162_{1...D}, may be modified to implement operations as illustrated in the FIGS. Encoder 102 and decoders may implement operations relating to the use of composite vector predictors illustrated in FIGS. 4-12.

### Video encoder

FIG. 2 illustrates encoder 102 to encode video frames and output an encoded bitstream, according to some embodiments of the disclosure. Encoder 102 may include one or more of: signal processing operations and data processing operations, including inter and intra-frame prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encodes video frames 104 into encoded bitstream 180. Encoder 102 may include one or more of partitioning 206, transform and quantization 214, inverse transform and inverse quantization 218, in-loop filter 228, motion estimation 234, inter-frame prediction 236, intra-frame prediction 238, and entropy coding 216.

Partitioning 206 may divide a frame in video frames 104 into blocks of pixels. Different codecs may allow different variable range of block sizes. In one codec, a frame may be partitioned by partitioning 206 into blocks of size 128x128 or 64x64 pixels. In some cases, a frame may be partitioned by partitioning 206 into blocks of 256x256 or 512x512 pixels. Large blocks may be referred to as superblocks. Partitioning 206 may further divide each superblock using a multi-way partition tree structure. In some cases, a partition of a superblock can be recursively divided further by partitioning 206 using the multi-way partition tree structure (e.g., down to 4x4 size blocks). In another codec, a frame may be partitioned by partitioning 206 into coding tree units of size 128x128 pixels. Partitioning 206 may divide a coding tree unit using a quadtree partitioning structure into four coding units. Partitioning 206 may further recursively divide a coding unit using the quadtree partitioning structure. Partitioning 206 may (further) subdivide a coding unit using a multi-type tree structure (e.g., a quadtree, a binary tree, or ternary tree structure). A smallest coding unit may have a size of 4x4. In some codecs, coding units of luma/luminance pixels may be subdivided into smaller coding units (e.g., performing more tree structure subdivisions) than coding units of chroma pixels (e.g., stopping tree structure subdivision earlier). Partitioning 206 may output original samples 208, e.g., as blocks of pixels. Operations performed in partitioning 206 create blocks of varying sizes from a superblock and are not to be confused with partitioning operations for creating subblocks (e.g., areas, regions, or parts) of a single block.

Intra-frame prediction 238 may predict samples of a block from reconstructed predicted samples of previously encoded spatial neighboring/reference blocks of the same frame. Intra-frame prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-frame prediction 238 may determine a suitable predictor for predicting the samples from reconstructed predicted samples of previously encoded spatial neighboring/reference blocks of the same frame. Intra-frame prediction 238 may generate predicted samples 212 generated using the suitable predictor. Intra-frame prediction 238 may output or identify the neighboring/reference block and a predictor used in generating the predicted samples 212. The identified neighboring/reference block and predictor may be encoded in the encoded bitstream 180 to enable a decoder to reconstruct a block using the same neighboring/reference block and predictor. In one codec, intra-frame prediction 238 may support a number of diverse predictors, e.g., 56 different predictors. Some predictors, e.g., directional predictors, may capture different spatial redundancies in directional textures. Pixel values of a block can be predicted using a directional predictor in intra-frame prediction 238 by extrapolating pixel values of a neighboring/reference block along a certain direction. Intra-frame prediction 238 of different codecs may support different sets of predictors to exploit different spatial patterns within the same frame. Examples of predictors may include direct current (DC), planar, Paeth, smooth, smooth vertical, smooth horizontal, recursive-based filtering modes, chroma-from-luma, intra-block copy, color palette, multiple-reference line, intra sub-partition, matrix-based intra-prediction (matrix coefficients may be defined by offline training using neural networks), wide-angle prediction, cross-component linear model, template matching, etc. In some cases, intra-frame prediction 238 may perform block-prediction, where a predicted block may be produced from a reconstructed neighboring/reference block of the same frame using a vector. Optionally, an interpolation filter of a certain type may be applied to the predicted block to blend pixels of the predicted block. Pixel values of a block can be predicted using a vector compensation process in intra-frame prediction 238 by translating a neighboring/reference block (within the same frame) according to the vector (and optionally applying an interpolation filter to the neighboring/reference block) to produce predicted samples 212. Intra-frame prediction 238 may output or identify the vector applied in generating predicted samples 212. In some codecs, intra-frame prediction 238 may encode (1) a residual vector generated from the applied vector and a vector predictor candidate, and (2) information that identifies the vector predictor candidate, rather than encoding the applied vector itself. Intra-frame prediction 238 may output or identify an interpolation filter type applied in generating predicted samples 212.

Motion estimation 234 and inter-frame prediction 236 may predict samples of a block from samples of previously encoded frames, e.g., reference frames in decoded picture buffer 232. Motion estimation 234 and inter-frame prediction 236 may perform motion compensation, which may involve identifying a suitable reference block and a suitable motion predictor (or vector) for a block and optionally an interpolation filter to be applied to the reference block. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. A motion predictor may include a reference block and a motion vector that can be applied to generate a motion compensated block or predicted block. Motion predictors may include motion vectors that capture the movement of blocks between frames in a video. Motion estimation 234 may output or identify one or more reference frames and one or more suitable motion predictors. Inter-frame prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s). In one codec, motion estimation 234 may implement single reference frame prediction mode, where a single reference frame with a corresponding motion predictor is used for inter-frame prediction 236. Motion estimation 234 may implement compound reference frame prediction mode where two reference frames with two corresponding motion predictors are used for inter-frame prediction 236. In one codec, motion estimation 234 may implement techniques for searching and identifying good reference frame(s) that can yield the most efficient motion predictor. The techniques in motion estimation 234 may include searching for good reference frame(s) candidates spatially (within the same frame) and temporally (in previously encoded frames). The techniques in motion estimation 234 may include searching a deep spatial neighborhood to find a spatial candidate pool. The techniques in motion estimation 234 may include utilizing temporal motion field estimation mechanisms to generate a temporal candidate pool. The techniques in motion estimation 234 may use a motion field estimation process. After temporal and spatial candidates may be ranked and a suitable motion predictor may be determined. In one codec, inter-frame prediction 236 may support a number of diverse motion predictors. Examples of predictors may include geometric motion vectors (complex, non-linear motion), warped motion compensation (affine transformations that capture non-translational object movements), overlapped block motion compensation, advanced compound prediction (compound wedge prediction, difference-modulated masked prediction, frame distance-based compound prediction, and compound inter-intra prediction), dynamic spatial and temporal motion vector referencing, affine motion compensation (capturing higher-order motion such as rotation, scaling, and sheering), adaptive motion vector resolution modes, geometric partitioning modes, bidirectional optical flow, prediction refinement with optical flow, bi-prediction with weights, extended merge prediction, etc. Optionally, an interpolation filter of a certain type may be applied to the predicted block to blend pixels of the predicted block. Pixel values of a block can be predicted using the motion predictor/vector determined in a motion compensation process in motion estimation 234 and inter-frame prediction 236 and optionally applying an interpolation filter. In some cases, inter-frame prediction 236 may perform motion compensation, where a predicted block may be produced from a reconstructed reference block of a reference frame using the motion predictor/vector. Inter-frame prediction 236 may output or identify the motion predictor/vector applied in generating predicted samples 212. In some codecs, inter-frame prediction 236 may encode (1) a residual vector generated from the applied vector and a vector predictor candidate, and (2) information that identifies the vector predictor candidate, rather than encoding the applied vector itself. Inter-frame prediction 236 may output or identify an interpolation filter type applied in generating predicted samples 212.

Mode selection 230 may be informed by components such as motion estimation 234 to determine whether inter-frame prediction 236 or intra-frame prediction 238 may be more efficient for encoding a block. Inter-frame prediction 236 may output predicted samples 212 of a predicted block. Inter-frame prediction 236 may output a selected predictor and a selected interpolation filter (if applicable) that may be used to generate the predicted block. Intra-frame prediction 238 may output predicted samples 212 of a predicted block. Intra-frame prediction 238 may output a selected predictor and a selected interpolation filter (if applicable) that may be used to generate the predicted block. Regardless of the mode, predicted residues 210 may be generated by subtractor 220 by subtracting original samples 208 by predicted samples 212. In some cases, predicted residues 210 may include residual vectors from inter-frame prediction 236 and/or intra-frame prediction 238.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the intra-frame prediction 238 and inter-frame prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Examples of transform kernels may include horizontal and vertical forms of discrete cosine transforms (DCT), asymmetrical discrete sine transform (ADST), flip ADST, and identity transform (IDTX), multiple transform selection, low-frequency non-separatable transform, subblock transform, non-square transforms, DCT-VIII, discrete sine transform VII (DST-VII), discrete wavelet transform (DWT), etc. Transforming may convert the predicted residues 210 into transform coefficients. Quantizing may quantize the transformed coefficients, e.g., by reducing the precision of the transform coefficients. Quantizing may include using quantization matrices (e.g., linear and non-linear quantization matrices). The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element in the quantization matrix and rounding to the nearest integer. Effectively, the quantization matrices may implement different quantization parameters (QPs) for different frequency bands and chroma planes and can use spatial prediction. A suitable quantization matrix can be selected and signaled for each frame and encoded in encoded bitstream 180. Transform and quantization 214 may output quantized transform coefficients and syntax elements 278 that indicate the coding modes and parameters used in the encoding process implemented in encoder 102.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse DCT, inverse DWT, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, inter-frame prediction 236, and intra-frame prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of filters may include constrained low-pass filter, directional deringing filter, edge-directed conditional replacement filter, loop restoration filter, Wiener filter, self-guided restoration filters, constrained directional enhancement filter, luma mapping with chroma scaling, sample adaptive offset filter, adaptive loop filter, cross-component adaptive loop filter, etc.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding. Different versions may have different pros and cons. In one codec, entropy coding 216 may implement (symbol to symbol) adaptive multi-symbol arithmetic coding. In another codec, entropy coding 216 may implement context-based adaptive binary arithmetic coder (CABAC). Binary arithmetic coding differs from multi-symbol arithmetic coding. Binary arithmetic coding encodes only a bit at a time, e.g., having either a binary value of 0 or 1. Binary arithmetic coding may first convert each symbol into a binary representation (e.g., using a fixed number of bits per-symbol). Handling just binary value of 0 or 1 can simplify computation and reduce complexity. Binary arithmetic coding may assign a probability to each binary value (e.g., a chance of the bit having a binary value of 0 and a chance of the bit having a binary value of 1). Multi-symbol arithmetic coding performs encoding for an alphabet having at least two or three symbol values and assigns a probability to each symbol value in the alphabet. Multi-symbol arithmetic coding can encode more bits at a time, which may result in a fewer number of operations for encoding the same amount of data. Multi-symbol arithmetic coding can require more computation and storage (since probability estimates may be updated for every element in the alphabet). Maintaining and updating probabilities (e.g., cumulative probability estimates) for each possible symbol value in multi-symbol arithmetic coding can be more complex (e.g., complexity grows with alphabet size). Multi-symbol arithmetic coding is not to be confused with binary arithmetic coding, as the two different entropy coding processes are implemented differently and can result in different encoded bitstreams for the same set of quantized transform coefficients and syntax elements 278.

As discussed herein, encoder 102 may be modified to implement operations as illustrated in FIGS 4-12.

### Video encoder

FIG. 3 illustrates decoder 1 162₁ to decode an encoded bitstream and output a decoded video, according to some embodiments of the disclosure. Decoder 1 162₁ may include one or more of: signal processing operations and data processing operations, including entropy decoding, inverse transform, inverse quantization, inter and intra-frame prediction, in-loop filtering, etc. Decoder 1 162₁ may have signal and data processing operations that mirror the operations performed in the encoder. Decoder 1 162₁ may apply signal and data processing operations that are signaled in encoded bitstream 180 to reconstruct the video. Decoder 1 162₁ may receive encoded bitstream 180 and generate and output decoded video 168₁ having a plurality of video frames. The decoded video 168₁ may be provided to one or more display devices for display to one or more human viewers. Decoder 1 162₁ may include one or more of entropy decoding 302, inverse transform and inverse quantization 218, in-loop filter 228, inter-frame prediction 236, and intra-frame prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180.

Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Inverse transform and inverse quantization 218 may output syntax elements 278 having signaling information for informing/instructing/controlling operations in decoder 1 162₁ such as mode selection 230, intra-frame prediction 238, inter-frame prediction 236, and in-loop filter 228.

Depending on the prediction modes signaled in the encoded bitstream 180 (e.g., as syntax elements in quantized transform coefficients and syntax elements 278), intra-frame prediction 238 or inter-frame prediction 236 may be applied to generate predicted samples 212.

Summer 222 may sum predicted samples 212 of a decoded reference block and reconstructed predicted residues 224 to produce reconstructed predicted samples 226 of a reconstructed block. For intra-frame prediction 238, the decoded reference block may be in the same frame as the block that is being decoded or reconstructed. For inter-frame prediction 236, the decoded reference block may be in a different (reference) frame in decoded picture buffer 232.

Intra-frame prediction 238 may determine a reconstructed vector based on a residual vector and a selected vector predictor candidate. Intra-frame prediction 238 may apply a reconstructed predictor or vector (e.g., in accordance with signaled predictor information) to the reconstructed block, which may be generated using a decoded reference block of the same frame. Intra-frame prediction 238 may apply a suitable interpolation filter type (e.g., in accordance with signaled interpolation filter information) to the reconstructed block to generate predicted samples 212.

Inter-frame prediction 236 may determine a reconstructed vector based on a residual vector and a selected vector predictor candidate. Inter-frame prediction 236 may apply a reconstructed predictor or vector (e.g., in accordance with signaled predictor information) to a reconstructed block, which may be generated using a decoded reference block of a different frame from decoded picture buffer 232. Inter-frame prediction 236 may apply a suitable interpolation filter type (e.g., in accordance with signaled interpolation filter information) to the reconstructed block to generate predicted samples 212.

In-loop filter 228 may receive reconstructed predicted samples and output decoded video 168₁.

As discussed herein, decoder 1 162₁ (and other decoders) may be modified to implement operations as illustrated in the FIGS. 4-12.

### Encoding residual vectors and selected vector predictor candidates in inter-frame prediction and intra-frame prediction

As described with FIGS. 2-3, intra-frame prediction 238 may exploit spatial redundancy to encode a block and utilize a neighboring/reference block that is in the same frame. Inter-frame prediction 236 may exploit temporal redundancy to encode a block and utilize a reference block that is in a different frame. Intra-frame prediction 238 and/or inter-frame prediction 236 in an encoder may implement some form of block-prediction, where a block is predicted based on a predictor, which includes a vector and a reference block. The encoder may perform a search to determine the most suitable predictor having the vector and the reference block. Intra-frame prediction 238 and/or inter-frame prediction 236 may encode a residual vector rather than the vector itself, by selecting a vector predictor candidate from one or more available vector predictor candidates that can minimize the residual vector.

FIG. 4A illustrates exemplary vector predictor candidates for a block, shown as current block 402, according to some embodiments of the disclosure. An encoder may determine a predictor that can be used to generate a predicted block of current block 402. The predictor may include a reference block and a vector that can be applied to the reference block to reconstruct current block 402. The vector may be referred to as the current vector of block 402. Rather than encoding the current vector of current block 402, a residual vector is encoded instead, which represents a difference between the current vector of block 402 and a selected/chosen vector predictor candidate. The selected/chosen vector predictor candidate may be selected or chosen out of one or more vector predictor candidates. The vector predictor candidates correspond to vectors determined for previously processed, neighboring/reference blocks to current block 402. An indexed predictor table may be used to represent the one or more vector predictor candidates. The specific vector predictor candidate that is chosen can be signaled in the encoded bitstream using an index of the indexed predictor table that corresponds to the specific vector predictor candidate.

Current block 402 may have one or more vector predictor candidates, e.g., one or more vectors determined for neighboring/reference, processed blocks, to choose from. One exemplary vector predictor candidate includes vector Mv0xy 410, which has a corresponding horizontal component Mv0x and a corresponding vehicle component Mv0y. One exemplary vector predictor candidate includes vector Mv1xy 412, which has a corresponding horizontal component Mv1x and a corresponding vehicle component Mv1y. One exemplary vector predictor candidate includes vector Mv2xy 414, which has a corresponding horizontal component Mv2x and a corresponding vehicle component Mv2y. One exemplary vector predictor candidate includes vector Mv3xy 416, which has a corresponding horizontal component Mv3x and a corresponding vehicle component Mv3y. One exemplary vector predictor candidate includes vector Mv4xy 418, which has a corresponding horizontal component Mv4x and a corresponding vehicle component Mv4y.

FIG. 4B illustrates an exemplary indexed predictor table having indices that correspond to the exemplary vector predictor candidates shown in FIG. 4A, according to some embodiments of the disclosure. A vector predictor candidate in the indexed predictor table can correspond to a vector of a previously processed block, such as a neighboring/reference block in the same frame as the block to be encoded, or a reference block in a reference frame.

In some implementations, the vector predictor candidates may be organized in the indexed predictor table in an ascending order of distances of the vector predictor candidate to the current vector of current block 402. An index of "0" in the indexed predictor table may correspond to a vector predictor candidate having vector Mv0xy 410. An index of "1" in the indexed predictor table may correspond to a vector predictor candidate having vector Mv1xy 412. An index of "2" in the indexed predictor table may correspond to a vector predictor candidate having vector Mv2xy 414. An index of "3" in the indexed predictor table may correspond to a vector predictor candidate having vector Mv3xy 416. An index of "4" in the indexed predictor table may correspond to a vector predictor candidate having vector Mv4xy 418.

In some codecs, the indexed predictor table may have, e.g., up to 8 different vector predictor candidates corresponding to 8 different indices. The exemplary index predictor table shown in FIG. 4B has 8 indices or spots, of which 5 are used or occupied by vector predictor candidates. The indexed predictor table may store or reference up to a maximum number of vector predictor candidates.

In some cases, the indexed predictor table may have fewer than a maximum number of vector predictor candidates because not all vectors of previously processed blocks are suitable or available to be used as a vector predictor candidate. Vectors of blocks which are larger than the block to be encoded may not be usable as a vector predictor candidate. Some neighboring blocks may not have vectors due to the neighboring blocks being intra-coded. Some neighboring blocks may not have been processed yet and vectors for the neighboring blocks are unavailable. Some vectors of processed, neighboring blocks may not be unique, and only one index is used to store the same valued vectors. The number of unique vectors as vector predictor candidates may be fewer than the maximum number of vector predictor candidates of the indexed predictor table.

If the indexed predictor table is not full of or filled with vector predictor candidates, one or more available indices may be used to signal one or more composite predictor candidates that is based on a horizontal component of a first existing vector predictor candidate in the indexed predictor table and a vertical component of a second existing vector predictor candidate in the indexed predictor table. The illustrated example in FIG. 4B may have 3 available indices.

The encoder may algorithmically or systematically follow a procedure to add composite predictor candidates if there are one or more available indices (or spots in the indexed predictor table) to use. If a composite predictor candidate is determined to be the best predictor candidate, then the encoder may signal to the decoder to use the composite predictor candidate by encoding the index corresponding to the composite predictor candidate into the bitstream. For example, the index of "5" may be used by the encoder to signal a composite predictor candidate having a vector that is based on a horizontal component Mv0x of the vector of the (non-separable) vector predictor candidate at index "0" and a vertical component Mv1y of the vector of the (non-separable) vector predictor candidate at index "1".

The decoder may also algorithmically or systematically follow the same procedure to determine the composite predictor candidate signaled based on the index in the encoded bitstream. For example, the decoder may read from the encoded bitstream the index of "5" and determine the corresponding composite predictor candidate at the index of "5". The decoder may determine that the composite predictor candidate is has a vector that includes a horizontal component Mv0x of the vector of the (non-separable) vector predictor candidate at index "0" and a vertical component Mv1y of the vector of the (non-separable) vector predictor candidate at index "1". The decoder may then use the composite predictor candidate and a residual vector to determine a reconstructed vector for the block.

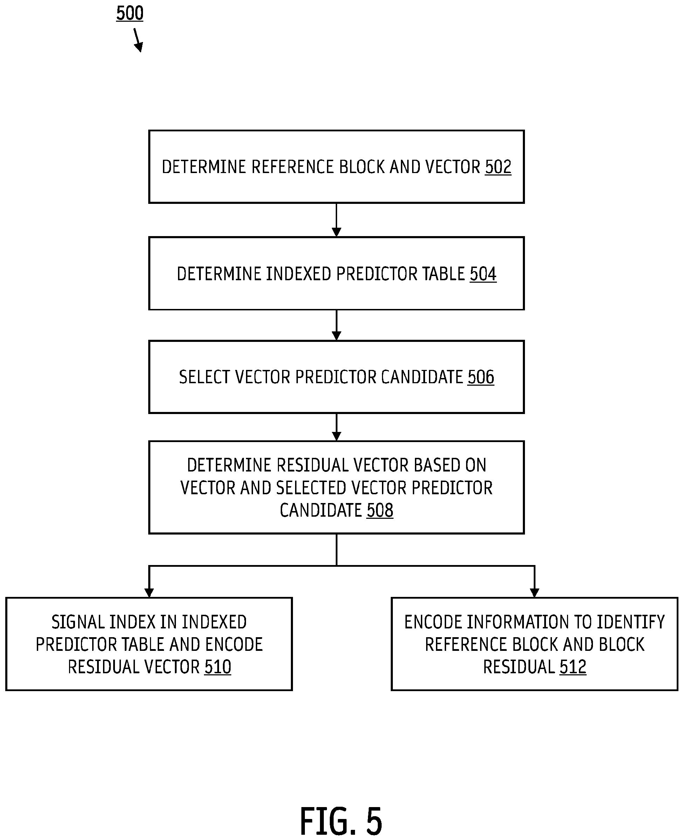

FIG. 5 depicts a flow diagram of an exemplary method 500 for encoding a block, according to some embodiments of the disclosure. A current block is to be encoded in an encoded bitstream by an encoder.

In 502, a reference block and a vector may be determined for the current block. The encoder may perform a search algorithm to determine the reference block and vector that best predicts the current block.

In 504, an indexed predictor table is determined for the current block.

In 506, based on the vector determined in 502, the best vector predictor candidate is selected or determined. As discussed herein, in some cases, the best vector predictor candidate can be a composite vector predictor based on components from different vector predictor candidates.

In 508, a residual vector is determined based on the vector determined in 502 and the best vector predictor candidate selected in 506.

In 510, the index in the indexed predictor table is signaled in the encoded bitstream, and the residual vector determined in 508 is encoded in the encoded bitstream.

In 512, information to identify the reference block and block residual representing a difference between the current block and the reference block (or a filtered version thereof) may be encoded in the encoded bitstream.

Information to identify the reference block, block residual, index in the indexed predictor table corresponding to the best vector predictor candidate, and residual vector constitutes information that can be used by a decoder to reconstruct the current block being encoded by method 500.

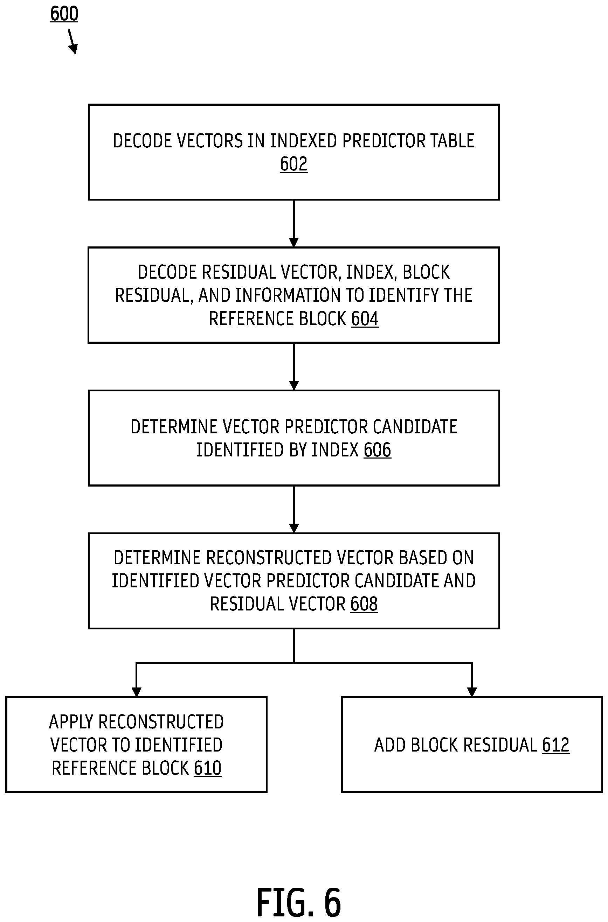

FIG. 6 depicts a flow diagram of an exemplary method 600 for decoding a block, according to some embodiments of the disclosure. A current block is to be decoded from an encoded bitstream by the decoder. The current block may have been previously encoded by method 500.

In 602, the decoder may perform decoding of other blocks. The processing of decoding of other blocks may include decoding or reconstructing vectors used to predict the other blocks. The decoded vectors may be organized or stored in an indexed predictor table of the current block to be decoded.

In 604, a residual vector of the current block to be decoded, an index of the indexed predictor table, block residual, and information to identify a reference block may be decoded or extracted from the encoded bitstream.

In 606, the vector predictor candidate identified by the index decoded in 604 may be determined. As discussed herein, the vector predictor candidate can be a composite vector predictor based on components from different vector predictor candidates.

In 608, a reconstructed vector may be determined based on the identified vector predictor candidate determined in 606 and the residual vector from 604. The residual vector may be added to the identified vector predictor candidate.

In 610, the reconstructed vector determined in 608 may be applied to the identified reference block to generate a predicted block.

In 612, the block residual may be added to the predicted block to generate a reconstructed block, or a part of a reconstructed frame.

### Non-separable vector predictor candidates versus composite vector predictor candidates

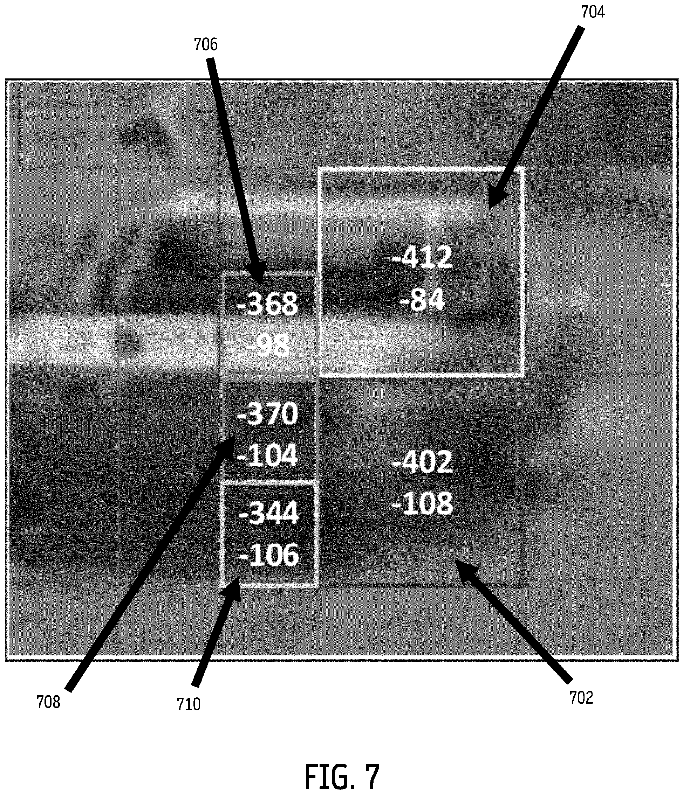

FIG. 7 illustrates examples of motion vectors, according to some embodiments of the disclosure. It is envisioned by the disclosure that the techniques may be applicable for selecting vector predictor candidates for encoding vectors used in block-prediction, and not necessarily for encoding motion vectors used in motion compensation only. Motion vectors for various blocks are shown in FIG. 7. Specifically, the exemplary motion vectors serve to showcase why composite vector predictors may result in better compression efficiencies and more accurate motion vector estimation. To illustrate the approach involving separable predictor components, the following passages compare the different implementations: (1) using a single (global or non-separable) predictor for both horizontal and vertical motion vector components, and (2) using separately selected predictors for horizontal and vertical motion vector components, e.g., composite vector predictors or composite vector predictor candidates. The selection may be performed using the minimum absolute difference criterion.

For block 702, a current motion vector (currMvxy) generated by motion estimation may be (-402, -108). -402 may correspond to a horizontal component currMvx of currMvxy. -108 may correspond to a vertical component currMvy of currMvxy.

One or more available predefined vector predictor candidates may include Mv0xy, Mv1xy, Mv2xy, and Mv3xy. The one or more predefined vector predictor candidates may correspond to the (determined and/or decoded) motion vectors of the neighboring/reference blocks, e.g., block 704, block 706, block 708, and block 710.
- Mv0xy may correspond to the motion vector of block 704, e.g., (-412, -84).
   ∘ -412 may correspond to a horizontal component Mv0x of Mv0xy.
   ∘ -84 may correspond to a vertical component Mv0y of Mv0xy.
- Mv1xy may correspond to the motion vector of block 706, e.g., (-368, -98).
   ∘ -368 may correspond to a horizontal component Mv1x of Mv1xy.
   ∘ -98 may correspond to a vertical component Mv1y of Mv1xy.
- Mv2xy may correspond to the motion vector of block 708, e.g., (-370, -104).
   ∘ -370 may correspond to a horizontal component Mv2x of Mv2xy.
   ∘ -104 may correspond to a vertical component Mv2y of Mv2xy.
- Mv3xy may correspond to the motion vector of block 710, e.g., (-344, -106).
   ∘ -344 may correspond to a horizontal component Mv3x of Mv3xy.
   ∘ -106 may correspond to a vertical component Mv3y of Mv3xy.

When using a single (global, non-separable) vector predictor candidate for both the horizontal and vertical motion vector components, a single or one predefined vector predictor candidate that minimizes the overall motion vector difference can be selected. The overall motion vector difference may include a Euclidean distance between currMvxy and each vector predictor candidate. The selection may result in a single or one predefined vector predictor candidate being chosen, such as Mv0xy, e.g., (-412,-84) of block 702, in this example.

The sum of the difference between currMvxy and Mv0xy (sum_diff1) may equal to 10+24=34. The residual vector resulting from selecting Mv0xy as the vector predictor candidate is (-402, -108) - (-412, -84) = (10, -24). The magnitude of the residual vector is 26. The sum of the absolute value of the horizontal component of the residual vector and the absolute value of the vertical component of the residual vector is 34.

When using separable vector predictor candidates for the horizontal and vertical motion vector components, two vector predictor candidates are separately selected. The selection criteria used for selecting the horizontal and vertical predictor may be the same. The selection criteria used for selecting the horizontal and vertical predictor can be different.

Suppose the selection criteria for selecting the horizontal predictor includes the minimum absolute difference between the horizontal component of a given vector predictor candidate and a horizontal component currMvx of currMvxy. For the horizontal component selection, the encoder may calculate the absolute differences between the horizontal component currMvx of currMvxy (-402) and the horizontal components of each vector predictor candidate of the neighboring/reference blocks, e.g.:
- For block 704 having vector Mv0xy: |currMvx - Mv0x| = |(-402) - (-412)| = 10,
- For block 706 having vector Mv1xy: |currMvx - Mv1x | = |(-402) - (-368)| = 34,
- For block 708 having vector Mv2xy: |currMvx - Mv2x| = |(-402) - (-370)| = 32, and
- For block 710 having vector Mv3xy: |currMvx - Mv3x| = |(-402) - (-344)| = 58.

The minimum absolute difference for the horizontal component is 10, corresponding to vector Mv0xy. An appropriate signal/index indicating the horizontal component Mv0x of Mv0xy may be encoded for the horizontal component.

Suppose the selection criteria for selecting the vertical predictor includes the minimum absolute difference between the vertical component of a given vector predictor candidate and a vertical component currMvy of currMvxy. For the vertical component selection, the encoder may calculate the absolute differences between the vertical component currMvy of currMvxy (-108) and the vertical components of each vector predictor candidate: of the neighboring/reference blocks, e.g.:
- For block 704 having vector Mv0xy: |currMvy - Mv0y| = |(-108) - (-84)| = 24,
- For block 706 having vector Mv1xy: |currMvy - Mv1y| = |(-108) - (-98)| = 10,
- For block 708 having vector Mv2xy: |currMvy - Mv2y| = |(-108) - (-104)| = 4, and
- For block 710 having vector Mv3xy: |currMvy - Mv3y| = |(-108) - (-106)| = 2.

The minimum absolute difference for the vertical component is 2, corresponding to vector Mv3xy. An appropriate signal/index for vertical component Mv3y of Mv3xy may be encoded for the vertical component.

Based on the above, the best vector predictor candidate for the horizontal component is Mv0xy (-412, -84), and the best vector predictor candidate for the vertical component is Mv3xy (-344, -106).

The sum of the difference between the horizontal components currMvx and Mv0x of currMvxy and Mv0xy respectively, and the vertical components of currMvy and Mv3y of currMvxy and Mv3xy respectively (sum_diff2) may equal to 10+2=12. sum_diff2 and smaller than sum_diff, which may mean that the coding of sum_diff2 (the residual motion vector) may demand fewer bits than the coding of sum_diff1. The residual vector resulting from selecting the horizontal component Mv0x and the vertical component Mv3y (-402, -108) - (-412, -106) = (10, -2). The magnitude of the residual vector is ~10.2. This magnitude is smaller than the magnitude of the residual vector resulting from selecting a non-separable vector predictor candidate. The sum of the absolute value of the horizontal component of the residual vector and the absolute value of the vertical component of the residual vector is 12. This sum is smaller than the sum of the absolute value of the horizontal component of the residual vector and the absolute value of the vertical component of the residual vector resulting from selecting a non-separable vector predictor candidate.

In the single (global or non-separable) vector predictor approach, a single global (global or non-separable) vector predictor candidate (e.g., MvOxy) may be selected for both horizontal and vertical components, aiming to minimize the overall or averaged motion vector difference in both the horizontal and the vertical direction. The approach may not account for variations in the motion patterns along the horizontal and vertical axes.

In the separable, composite vector predictor approach, separate vector predictor candidates are chosen for the horizontal and vertical components independently, e.g., based on the minimum absolute difference criterion. This fine-grained selection allows for more accurate prediction tailored to the specific motion characteristics along each axis, potentially resulting in improved compression efficiency and video quality, especially for scenarios with complex or non-uniform motion patterns. Overall, the separable vector predictor approach involving composite vector predictors can offer greater adaptability and precision in motion vector prediction, particularly when dealing with challenging motion patterns, such as diagonal motion in the example shown in FIG. 7.

### Exemplary indexed predictor tables having one or more available indices to signal the use of one or more composite vector predictors

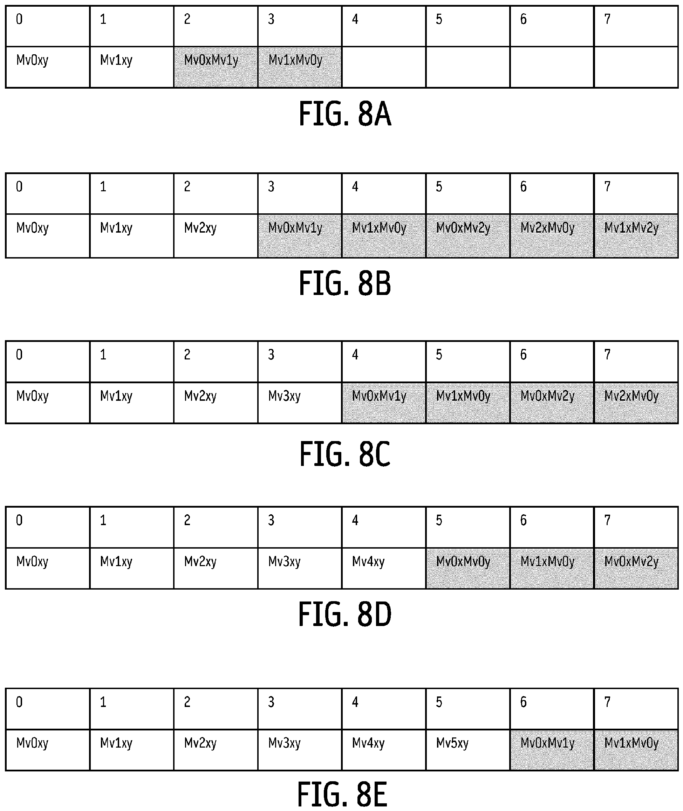

FIGS. 8A-E illustrate exemplary indexed predictor tables, according to some embodiments of the disclosure. In some cases, the indexed predictor table is not full, and one or more (available/free) indices may be used to signal the use of a composite vector predictor candidate. The composite vector predictor candidates may have components from different predefined (non-separable) vector predictor candidates in the indexed predictor table.

According to a predetermined scheme, the available slots/indices in the indexed predictor table may be used to signal specific composite vector predictor candidates. FIGS. 8A-E illustrates an exemplary scheme where composite vector predictor candidates may be iteratively or progressively added to the indexed predictor table (or assigned/designated to the available indices) until the indexed predictor table is full (or until there are no more available indices left). The scheme may determine an ordered sequence of composite vector predictor candidates that may be added, e.g., Mv1xMv0y, Mv0xMv1y, Mv0xMv2y, Mv2xMv0y, MvlxMv2y, Mv2xMvly, etc. The ordered sequence of composite vector predictor candidates may vary depending on the implementation. The scheme may be predefined and used by both the encoder and the decoder. The illustrated scheme may work well in using the available slots or indices, in some cases, by referencing predictor candidates at index "0" and index "1" early in the ordered sequence of vector predictor candidates due to the predefined (non-separable) vector predictor candidates being arranged in an ascending order of distances to the vector of the current block to be encoded.

In FIG. 8A, there are two non-separable vector predictor candidates, e.g., Mv0xy and Mv1xy, at index "0" and index "1" respectively. Index "2" may be used to signal a composite vector predictor candidate Mv0xMv1y that has a horizontal component Mv0x of Mv0xy and a vertical component Mv1y of Mv1xy. Index "3" may be used to signal a composite vector predictor candidate Mv1xMv0y that has a horizontal component Mv1x of Mv1xy and a vertical component Mv0y of Mv0xy.

In FIG. 8B, there are three non-separable vector predictor candidates, e.g., Mv0xy, Mv1xy, and Mv2xy, at index "0", index "1", and index "2" respectively. Index "3" may be used to signal a composite vector predictor candidate Mv0xMv1y that has a horizontal component Mv0x of Mv0xy and a vertical component Mv1y of Mv1xy. Index "4" may be used to signal a composite vector predictor candidate Mv1xMv0y that has a horizontal component Mv1x of Mv1xy and a vertical component Mv0y of Mv0xy. Index "5" may be used to signal a composite vector predictor candidate Mv0xMv2y that has a horizontal component Mv0x of Mv0xy and a vertical component Mv2y of Mv2xy. Index "6" may be used to signal a composite vector predictor candidate Mv2xMv0y that has a horizontal component Mv2x of Mv2xy and a vertical component Mv0y of Mv0xy. Index "7" may be used to signal a composite vector predictor candidate MvlxMv2y that has a horizontal component Mv1x of Mv1xy and a vertical component Mv2y of Mv2xy.

In FIG. 8C, there are four non-separable vector predictor candidates, e.g., Mv0xy, Mv1xy, Mv2xy, and Mv3xy, at index "0", index "1", index "2", and index "3" respectively. Index "4" may be used to signal a composite vector predictor candidate Mv0xMv1y that has a horizontal component Mv0x of Mv0xy and a vertical component Mv1y of Mv1xy. Index "5" may be used to signal a composite vector predictor candidate Mv1xMv0y that has a horizontal component Mv1x of Mv1xy and a vertical component Mv0y of Mv0xy. Index "6" may be used to signal a composite vector predictor candidate Mv0xMv2y that has a horizontal component Mv0x of Mv0xy and a vertical component Mv2y of Mv2xy. Index "7" may be used to signal a composite vector predictor candidate Mv2xMv0y that has a horizontal component Mv2x of Mv2xy and a vertical component Mv0y of Mv0xy.

In FIG. 8D, there are five non-separable vector predictor candidates, e.g., Mv0xy, Mv1xy, Mv2xy, Mv3xy, and Mv4xy, at index "0", index "1", index "2", index "3", and index "4" respectively. Index "5" may be used to signal a composite vector predictor candidate Mv0xMv1y that has a horizontal component Mv0x of Mv0xy and a vertical component Mv1y of Mv1xy. Index "6" may be used to signal a composite vector predictor candidate Mv1xMv0y that has a horizontal component Mv1x of Mv1xy and a vertical component Mv0y of Mv0xy. Index "7" may be used to signal a composite vector predictor candidate Mv0xMv2y that has a horizontal component Mv0x of Mv0xy and a vertical component Mv2y of Mv2xy.

In FIG. 8E, there are five non-separable vector predictor candidates, e.g., Mv0xy, Mv1xy, Mv2xy, Mv3xy, Mv4xy, and Mv5xy at index "0", index "1", index "2", index "3", index "4", and index "5" respectively. Index "6" may be used to signal a composite vector predictor candidate Mv0xMv1y that has a horizontal component Mv0x of Mv0xy and a vertical component Mv1y of Mv1xy. Index "7" may be used to signal a composite vector predictor candidate Mv1xMv0y that has a horizontal component Mv1x of Mv1xy and a vertical component Mv0y of Mv0xy.

### Exemplary encoder implementation

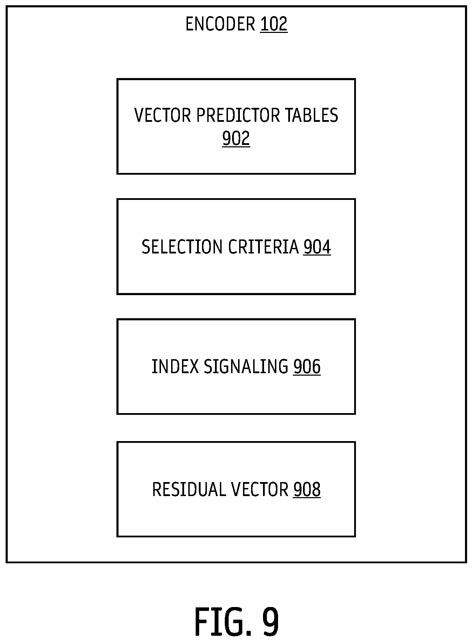

FIG. 9 illustrates an exemplary encoder 102, according to some embodiments of the disclosure. Encoder 102 may implement and/or include one or more of: (motion) vector predictor tables 902, selection criteria 904, index signaling 906, and residual vector 908.

Encoder 102 may include or maintain vector predictor tables 902 (sometimes referred herein as indexed predictor tables). Vector predictor tables 902 may include tables of predefined vector predictor candidates each having horizontal and vertical vector components. Vector predictor tables 902 may include vector predictor candidates based on one or more of: reference blocks, spatial patterns, temporal patterns, or other suitable factors.

Encoder 102 may include selection criteria 904. Selection criteria 904 may, for a block (or each block) of a video frame, evaluate available vector predictor candidates (e.g., in vector predictor tables 902) and select the best or optimal horizontal and vertical predictors or predictor components separately. Selection criteria 904 can optimize prediction accuracy in the selection of predictors. Selection criteria 904 may change based on characteristics of the video being encoded (e.g., at a sequence of frames level, at a frame level, or at a block-level). Selection criteria 904 may toggle between using composite vector predictors and not using composite vector predictors (e.g., using only non-separable composite vector predictors).

Encoder 102 may include index signaling 906. Index signaling 906 may encode or write separate indices for the selected horizontal and vertical predictors in the compressed video bitstream. In some embodiments, index signaling 906 may encode separate indices if the chosen predictors selected by selection criteria 904 were not derived from the same predefined motion vector. Indices written or encoded by index signaling 906 may indicate which horizontal and vertical predictors have been selected for the block (or each block).

In some cases, index signaling 906 may encode an index that corresponds to a composite vector predictor candidate. The index may be predetermined to refer/correspond to a specific combination of horizontal component of a first vector predictor candidate and a vertical component a second vector predictor candidate, without needing to use two indices to refer to the first vector predictor candidate and the second vector predictor candidate.

In some cases, index signaling 906 may encode one or more syntax elements in the encoded bitstream to indicate whether composite vector predictor candidates are used or not. The syntax element may be included at a sequence of frames level, e.g., in a sequence header. The syntax element may be included at a frame level, e.g., in a frame header. The syntax element may be included at a block-level, e.g., in block metadata.

In some embodiments, encoder 102 may have components such as intra-frame prediction 238, inter-frame prediction 236, and motion estimation 234 as illustrated in FIG. 2. One or more such components of encoder 102 may determine a reference block and a vector for a block to be encoded. One or more such components of encoder 102 may determine one or more vector predictor candidates for the block to be encoded. The one or more vector predictor candidates may be in vector predictor tables 902 (or an indexed predictor table). Selection criteria 904 may determine a first vector predictor candidate in the one or more vector predictor candidates that has a horizontal component that is closest to a horizontal component of the vector. Selection criteria 904 may determine a second vector predictor candidate in the one or more vector predictor candidates that has a vertical component that is closest to a vertical component of the vector. The second vector predictor candidate may be different from the first vector predictor candidate. Index signaling 906 may determine an index in an indexed predictor table that corresponds a third vector predictor candidate. The third vector predictor candidate corresponds to the horizontal component of the first vector predictor candidate and the vertical component of the second vector predictor candidate. The third vector predictor candidate may be a composite vector predictor candidate. Index signaling 906 may encode the index for the block to be encoded in an encoded bitstream.

In some embodiments, selection criteria 904 may determine the first vector predictor candidate by determining horizontal absolute differences between the horizontal component of the vector and a horizontal component of each one of the one or more vector predictor candidates. In some embodiments, the first vector predictor candidate has a smallest horizontal absolute difference out of the horizontal absolute differences.

In some embodiments, selection criteria 904 may determine the second vector predictor candidate by determining vertical absolute differences between the vertical component of the vector and a vertical component of each one of the one or more vector predictor candidates. In some embodiments, the second vector predictor candidate has a smallest vertical absolute difference out of the vertical absolute differences.

Using the selected vector predictor candidates selected in selection criteria 904, the encoder 102 may determine residual vector 908. In some embodiments, the encoder 102 may determine a horizontal component of a residual vector 908 based on the vector and the horizontal component of the first vector predictor candidate. The horizontal component of residual vector 908 may include a difference between a horizontal component of the vector and the horizontal component of the first vector predictor candidate. The encoder 102 may determine a vertical component of the residual vector 908 based on the vector and the vertical component of the second vector predictor candidate. The vertical component of residual vector 908 may include a difference between a vertical component of the vector and the vertical component of the second vector predictor candidate. The encoder 102 may encode the residual vector 908 in the encoded bitstream.

In some cases, a magnitude of the residual vector 908 is smaller than a magnitude of a further residual vector based on the vector and the first vector predictor candidate. The further residual vector may have a horizontal component based on the vector and the horizontal component of the first vector predictor candidate, and a vertical component based on the vector and the vertical component of the first vector predictor candidate. The further residual vector may have been the result of not using a composite vector predictor candidate. In some cases, a sum of the horizontal component of residual vector 908 and the vertical component of residual vector 908 is smaller than a sum of the horizontal component of further residual vector and the vertical component of further residual vector.

In some cases, a magnitude of the residual vector 908 is smaller than a magnitude of a further residual vector based on the vector and the second vector predictor candidate. The further residual vector may have a horizontal component based on the vector and the horizontal component of the second vector predictor candidate, and a vertical component based on the vector and the vertical component of the second vector predictor candidate. The further residual vector may have been the result of not using a composite vector predictor candidate. In some cases, a sum of the horizontal component of residual vector 908 and the vertical component of residual vector 908 is smaller than a sum of the horizontal component of further residual vector and the vertical component of further residual vector.

In some embodiments, the indexed predictor table (e.g., in vector predictor tables 902) includes the first vector predictor candidate, the second vector predictor candidate, and the third vector predictor candidate. In some embodiments, the indexed predictor table includes indices that correspond to the first vector predictor candidate, the second vector predictor candidate, and the third vector predictor candidate. The first vector predictor candidate can correspond to a vector of a first encoded block in the encoded bitstream. The second vector predictor candidate can correspond to a vector of a second encoded block in the encoded bitstream.

### Exemplary encoder implementation

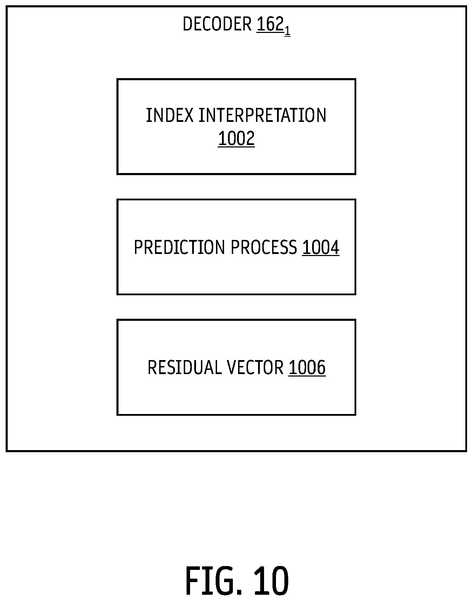

FIG. 10 illustrates an exemplary decoder 162₁, according to some embodiments of the disclosure. Decoder 162₁ may implement and/or include one or more of: index interpretation 1002, prediction process 1004, and residual vector 1006 (e.g., residual motion vector, residual vector, etc.).

Decoder 162₁ may include index interpretation 1002. Decoder 162₁ may receive the compressed/encoded bitstream, which may include one or more indices signaled by the encoder (e.g., encoder 102 of the FIGS.). Index interpretation 1002 may use one or more indices in the compressed/encoded bitstream to select or determine the corresponding horizontal and vertical predictors from the decoder's own tables. Index interpretation 1002 may determine a corresponding composite vector predictor candidate based on the index, where the composite vector predictor candidate may include a horizontal component of a first vector predictor candidate and a vertical component a second vector predictor candidate.

Decoder 162₁ may include prediction process 1004. Based on the determined predictor candidate (e.g., a non-separable vector predictor candidate or a composite vector predictor candidate) retrieved by index interpretation 1002, prediction process 1004 may reconstruct the motion vector for a block. Prediction process 1004 may determine separate horizontal and vertical motion vector components corresponding to vector predictor candidate signaled by the one or more indices.

Decoder 162₁ may include residual vector 1006. Remaining motion information not accounted by the determined predictor candidate may be presented as the residual motion vector. The residual vector 1006 may be encoded by the encoder (e.g., encoder 102 of the FIGS.) and transmitted as part of the compressed/encoded bitstream. Residual vector 1006 and the determined predictor candidate retrieved by index interpretation 1002 may be used by prediction process 1004 to reconstruct the motion vector for a block, and the residual motion vector is taken into account when reconstructing at least a part of video frame.

Prediction process 1004 may decode from the compressed/encoded bitstream the residual vector 1006, which may have a first (horizontal) component of the residual vector and a second (vertical) component of the residual vector.

In some embodiments, decoder 162₁ may have components such as intra-frame prediction 238, and inter-frame prediction 236 as illustrated in FIG. 3. One or more such components of decoder 162₁ may determine a reference block and a residual vector (e.g., residual vector 1006) from an encoded bitstream. Index interpretation 1002 may determine an indexed predictor table from the encoded bitstream. The indexed predictor table can include a first index corresponding to a first vector predictor having a first decoded vector of a first decoded block, a second index corresponding to a second vector predictor having a second decoded vector of a second decoded block, and a third index corresponding to a third vector predictor having a first component of the first decoded vector and a second component of the second decoded vector. Index interpretation 1002 may determine a corresponding vector predictor in the indexed predictor table based on an index of the indexed predictor table signaled in the encoded bitstream. Prediction process 1004 may determine a reconstructed vector based on the corresponding vector predictor and the residual vector. Prediction process 1004 may apply the reconstructed vector to the reference block to produce a predicted block.

In some embodiments, prediction process 1004 may determine or extract block residual from the encoded bitstream. Prediction process 1004 may apply the block residual to the predicted block to produce a part of a reconstructed frame.

In some embodiments, the first component of the first decoded vector is a horizontal component of the first decoded vector. In some embodiments, the second component of the second decoded vector is a vertical component of the second decoded vector.

In some embodiments, the residual vector 1006 has a first component of the residual vector and a second component of the residual vector, and the reconstructed vector comprises a first component of the reconstructed vector and a second component of the reconstructed vector. Prediction process 1004 may determine the reconstructed vector by adding the first component of the residual vector and the first component of the first decoded vector to obtain the first component of the reconstructed vector and adding the second component of the residual vector and the second component of the second decoded vector to obtain the second component of the reconstructed vector.

### Methods utilizing composite vector predictors

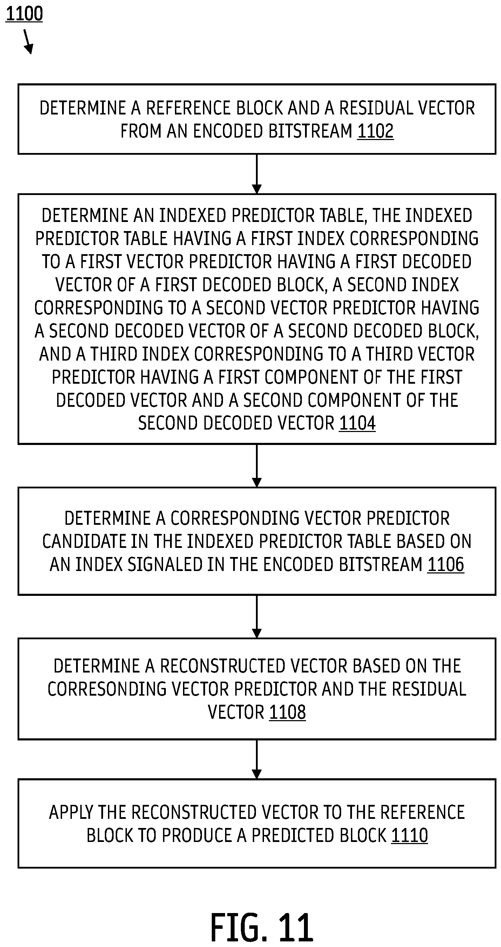

FIG. 11 depicts a flow diagram of an exemplary method 1100 for decoding an encoded bitstream, according to some embodiments of the disclosure. Method 1100 may be implemented in a decoder as described and illustrated herein. Method 1100 may illustrate an example of method 600 in FIG. 6. Method 1100 may be carried out by computing device 1300 of FIG. 13.

In 1102, a reference block and a residual vector are determined from an encoded bitstream.

In 1104, an indexed predictor table may be determined from the encoded bitstream. The indexed predictor table can include a first index corresponding to a first vector predictor having a first decoded vector of a first decoded block, a second index corresponding to a second vector predictor having a second decoded vector of a second decoded block, and a third index corresponding to a third vector predictor having a first component of the first decoded vector and a second component of the second decoded vector.

In 1106, a corresponding vector predictor in the indexed predictor table may be determined based on an index of the indexed predictor table signaled in the encoded bitstream.

In 1108, a reconstructed vector may be determined based on the corresponding vector predictor and the residual vector.

In 1110, the reconstructed vector may be applied to the reference block to produce a predicted block.

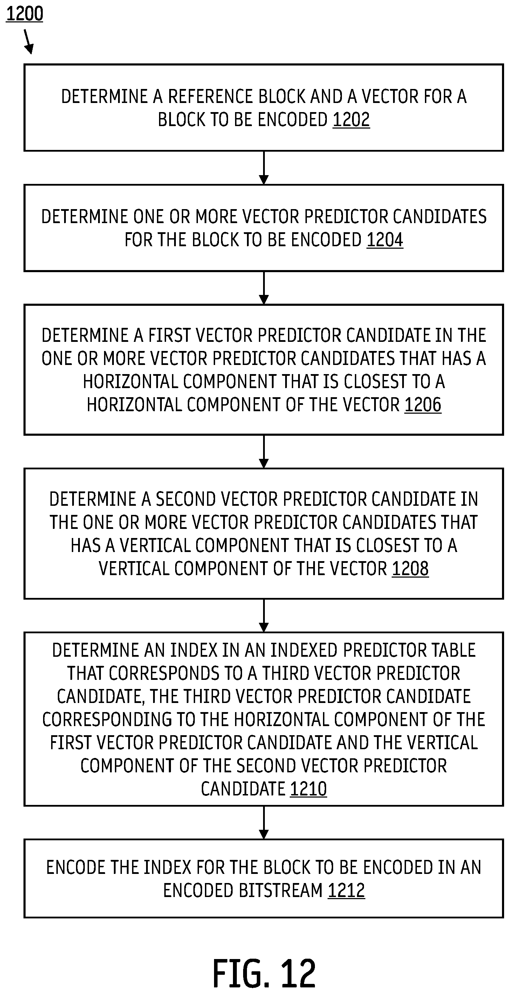

FIG. 12 depicts a flow diagram of an exemplary method 1200 for encoding a video, according to some embodiments of the disclosure. Method 1200 may be implemented in an encoder as described and illustrated herein. Method 1200 may illustrate an example of method 500 in FIG. 5. Method 1200 may be carried out by computing device 1300 of FIG. 13.

In 1202, a reference block and a vector for a block to be encoded are determined.

In 1204, one or more vector predictor candidates for the block to be encoded are determined.

In 1206, a first vector predictor candidate in the one or more vector predictor candidates that has a horizontal component that is closest to a horizontal component of the vector is determined.

In 1208, a second vector predictor candidate in the one or more vector predictor candidates that has a vertical component that is closest to a vertical component of the vector is determined. The second vector predictor candidate may be different from the first vector predictor candidate.

In 1210, an index in an indexed predictor table may be determined. The index can correspond to a third vector predictor candidate. The third vector predictor candidate may correspond to the horizontal component of the first vector predictor candidate and the vertical component of the second vector predictor candidate.

In 1212, the index for the block to be encoded is encoded in an encoded bitstream.

### Exemplary computing device

FIG. 13 is a block diagram of an apparatus or a system, e.g., an exemplary computing device 1300, according to some embodiments of the disclosure. One or more computing devices 1300 may be used to implement the functionalities described with the FIGS. and herein. A number of components are illustrated in the FIGS. can be included in the computing device 1300, but any one or more of these components may be omitted or duplicated, as suitable for the application. In some embodiments, some or all of the components included in the computing device 1300 may be attached to one or more motherboards. In some embodiments, some or all of these components are fabricated onto a single system on a chip (SoC) die. Additionally, in various embodiments, the computing device 1300 may not include one or more of the components illustrated in FIG. 13, and the computing device 1300 may include interface circuitry for coupling to the one or more components. For example, the computing device 1300 may not include a display device 1306, and may include display device interface circuitry (e.g., a connector and driver circuitry) to which a display device 1306 may be coupled. In another set of examples, the computing device 1300 may not include an audio input device 1318 or an audio output device 1308 and may include audio input or output device interface circuitry (e.g., connectors and supporting circuitry) to which an audio input device 1318 or audio output device 1308 may be coupled.

The computing device 1300 may include a processing device 1302 (e.g., one or more processing devices, one or more of the same type of processing device, one or more of different types of processing device). The processing device 1302 may include electronic circuitry that process electronic data from data storage elements (e.g., registers, memory, resistors, capacitors, quantum bit cells) to transform that electronic data into other electronic data that may be stored in registers and/or memory. Examples of processing device 1302 may include a central processing unit (CPU), a graphics processing unit (GPU), a quantum processor, a machine learning processor, an artificial intelligence processor, a neural-network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1300 may include a memory 1304, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1304 includes one or more non-transitory computer-readable storage media. In some embodiments, memory 1304 may include memory that shares a die with the processing device 1302. In some embodiments, memory 1304 includes one or more non-transitory computer-readable media storing instructions executable to perform operations described herein, such as operations illustrated in FIGS. 1-12, method 500, method 600, method 1100, and method 1200. Memory 1304 may include one or more non-transitory computer-readable media storing instructions executable to perform operations associated with determining and encoding best/optimal predictors separately for the horizontal motion vector component and the vertical motion vector component. Memory 1304 may include one or more non-transitory computer-readable media storing instructions executable to perform operations associated with decoding and applying predictors separately for the horizontal motion vector component and the vertical motion vector component. Memory 1304 may include one or more non-transitory computer-readable media storing one or more of: input frames to the encoder, intermediate data structures computed by the encoder, bitstream generated by the encoder, bitstream received by a decoder, intermediate data structures computed by the decoder, and reconstructed frames generated by the decoder. Memory 1304 may include one or more non-transitory computer-readable media storing one or more of: data received and/or data generated by method 500 of FIG. 5. Memory 1304 may include one or more non-transitory computer-readable media storing one or more of: data received and/or data generated by method 600 of FIG. 6. The instructions stored in the one or more non-transitory computer-readable media may be executed by processing device 1302. In some embodiments, memory 1304 may store data, e.g., data structures, binary data, bits, metadata, files, blobs, etc., as described with the FIGS. and herein. Exemplary data that may be stored in memory 1304 are depicted. Memory 1304 may store one or more data as depicted.

In some embodiments, the computing device 1300 may include a communication device 1312 (e.g., one or more communication devices). For example, the communication device 1312 may be configured for managing wired and/or wireless communications for the transfer of data to and from the computing device 1300. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1312 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1312 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1312 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1312 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 1312 may operate in accordance with other wireless protocols in other embodiments. The computing device 1300 may include an antenna 1322 to facilitate wireless communications and/or to receive other wireless communications (such as radio frequency transmissions). Computing device 1300 may include receiver circuits and/or transmitter circuits. In some embodiments, the communication device 1312 may manage wired communications, such as electrical, optical, or any other suitable communication protocols (e.g., the Ethernet). As noted above, the communication device 1312 may include multiple communication chips. For instance, a first communication device 1312 may be dedicated to shorter-range wireless communications such as Wi-Fi or Bluetooth, and a second communication device 1312 may be dedicated to longer-range wireless communications such as global positioning system (GPS), EDGE, GPRS, CDMA, WiMAX, LTE, EV-DO, or others. In some embodiments, a first communication device 1312 may be dedicated to wireless communications, and a second communication device 1312 may be dedicated to wired communications.

The computing device 1300 may include power source / power circuitry 1314. The power source / power circuitry 1314 may include one or more energy storage devices (e.g., batteries or capacitors) and/or circuitry for coupling components of the computing device 1300 to an energy source separate from the computing device 1300 (e.g., DC power, AC power, etc.).

The computing device 1300 may include a display device 1306 (or corresponding interface circuitry, as discussed above). The display device 1306 may include any visual indicators, such as a heads-up display, a computer monitor, a projector, a touchscreen display, a liquid crystal display (LCD), a light-emitting diode display, or a flat panel display, for example.

The computing device 1300 may include an audio output device 1308 (or corresponding interface circuitry, as discussed above). The audio output device 1308 may include any device that generates an audible indicator, such as speakers, headsets, or earbuds, for example.

The computing device 1300 may include an audio input device 1318 (or corresponding interface circuitry, as discussed above). The audio input device 1318 may include any device that generates a signal representative of a sound, such as microphones, microphone arrays, or digital instruments (e.g., instruments having a musical instrument digital interface (MIDI) output).

The computing device 1300 may include a GPS device 1316 (or corresponding interface circuitry, as discussed above). The GPS device 1316 may be in communication with a satellite-based system and may receive a location of the computing device 1300, as known in the art.

The computing device 1300 may include a sensor 1330 (or one or more sensors). The computing device 1300 may include corresponding interface circuitry, as discussed above). Sensor 1330 may sense physical phenomenon and translate the physical phenomenon into electrical signals that can be processed by, e.g., processing device 1302. Examples of sensor 1330 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1300 may include another output device 1310 (or corresponding interface circuitry, as discussed above). Examples of the other output device 1310 may include an audio codec, a video codec, a printer, a wired or wireless transmitter for providing information to other devices, haptic output device, gas output device, vibrational output device, lighting output device, home automation controller, or an additional storage device.

The computing device 1300 may include another input device 1320 (or corresponding interface circuitry, as discussed above). Examples of the other input device 1320 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1300 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1300 may be any other electronic device that processes data.

### Select examples

Example 1 provides a method, including determining a reference block and a residual vector from an encoded bitstream; determining an indexed predictor table from the encoded bitstream, where the indexed predictor table includes a first index corresponding to a first vector predictor having a first decoded vector of a first decoded block, a second index corresponding to a second vector predictor having a second decoded vector of a second decoded block, and a third index corresponding to a third vector predictor having a first component of the first decoded vector and a second component of the second decoded vector; determining a corresponding vector predictor in the indexed predictor table based on an index of the indexed predictor table signaled in the encoded bitstream; determining a reconstructed vector based on the corresponding vector predictor and the residual vector; and applying the reconstructed vector to the reference block to produce a predicted block.

Example 2 provides the method of example 1, further including determining a block residual from the encoded bitstream; and applying the block residual to the predicted block to produce a part of a reconstructed frame.

Example 3 provides the method of example 1 or 2, where the first component of the first decoded vector is a horizontal component of the first decoded vector.

Example 4 provides the method of any one of examples 1-3, where the second component of the second decoded vector is a vertical component of the second decoded vector.

Example 5 provides the method of any one of examples 1-4, where the indexed predictor table further includes a fourth index corresponding to a fourth vector predictor having a first component of the second decoded vector and a second component of the first decoded vector.

Example 6 provides the method of any one of examples 1-5, where the indexed predictor table further includes a fifth index corresponding to a fifth vector predictor having to a third decoded vector of a third decoded block.

Example 7 provides the method of example 6, where the indexed predictor table further includes a sixth index corresponding to a sixth vector predictor having the first component of the first decoded vector and a second component of the third decoded vector.

Example 8 provides the method of example 6 or 7, where the indexed predictor table further includes a seventh index corresponding to a seventh vector predictor having a first component of the third decoded vector and a second component of the first decoded vector.

Example 9 provides the method of any one of examples 6-8, where the indexed predictor table further includes an eighth index corresponding to an eighth vector predictor having a first component of the second decoded vector and a second component of the third decoded vector.

Example 10 provides the method of any one of examples 6-9, where the indexed predictor table further includes a nineth index corresponding to a nineth vector predictor having a first component of the third decoded vector and a second component of the second decoded vector.

Example 11 provides the method of any one of examples 1-10, where: the residual vector includes a first component of the residual vector and a second component of the residual vector; the reconstructed vector includes a first component of the reconstructed vector and a second component of the reconstructed vector; and determining the reconstructed vector includes adding the first component of the residual vector and the first component of the first decoded vector to obtain the first component of the reconstructed vector; and adding the second component of the residual vector and the second component of the second decoded vector to obtain the second component of the reconstructed vector.

Example 12 provides a method, including determining a reference block and a vector for a block to be encoded; determining one or more vector predictor candidates for the block to be encoded; determining a first vector predictor candidate in the one or more vector predictor candidates that has a horizontal component that is closest to a horizontal component of the vector; determining a second vector predictor candidate in the one or more vector predictor candidates that has a vertical component that is closest to a vertical component of the vector, where the second vector predictor candidate is different from the first vector predictor candidate; determining an index in an indexed predictor table that corresponds a third vector predictor candidate, where the third vector predictor candidate corresponds to the horizontal component of the first vector predictor candidate and the vertical component of the second vector predictor candidate; and encoding the index for the block to be encoded in an encoded bitstream.

Example 13 provides the method of example 12, where determining the first vector predictor candidate includes determining horizontal absolute differences between the horizontal component of the vector and a horizontal component of each one of the one or more vector predictor candidates.

Example 14 provides the method of example 13, where the first vector predictor candidate has a smallest horizontal absolute difference out of the horizontal absolute differences.

Example 15 provides the method of any one of examples 12-14, where determining the second vector predictor candidate includes determining vertical absolute differences between the vertical component of the vector and a vertical component of each one of the one or more vector predictor candidates.

Example 16 provides the method of example 15, where the second vector predictor candidate has a smallest vertical absolute difference out of the vertical absolute differences.

Example 17 provides the method of any one of examples 12-16, further including determining a horizontal component of a residual vector based on the vector and the horizontal component of the first vector predictor candidate; and determining a vertical component of the residual vector based on the vector and the vertical component of the second vector predictor candidate.

Example 18 provides the method of example 17, further including encoding the residual vector in the encoded bitstream.

Example 19 provides the method of example 17 or 18, where a magnitude of the residual vector is smaller than a magnitude of a further residual vector based on the vector and the first vector predictor candidate.

Example 20 provides the method of any one of examples 17-19, where a magnitude of the residual vector is smaller than a magnitude of a further residual vector based on the vector and the second vector predictor candidate.

Example 21 provides the method of any one of examples 12-20, where the indexed predictor table includes the first vector predictor candidate, the second vector predictor candidate, and the third vector predictor candidate.

Example 22 provides the method of any one of examples 12-21, where the first vector predictor candidate corresponds to a vector of a first encoded block in the encoded bitstream.

Example 23 provides the method of any one of examples 12-22, where the second vector predictor candidate corresponds to a vector of a second encoded block in the encoded bitstream.

Example 24 provides one or more non-transitory computer-readable media storing instructions that, when executed by one or more processors, cause the one or more processors to: determine a reference block and a residual vector from an encoded bitstream; determine an indexed predictor table from the encoded bitstream, where the indexed predictor table includes a first index corresponding to a first vector predictor having a first decoded vector of a first decoded block, a second index corresponding to a second vector predictor having a second decoded vector of a second decoded block, and a third index corresponding to a third vector predictor having a first component of the first decoded vector and a second component of the second decoded vector; determine a corresponding vector predictor in the indexed predictor table based on an index of the indexed predictor table signaled in the encoded bitstream; determine a reconstructed vector based on the corresponding vector predictor and the residual vector; and apply the reconstructed vector to the reference block to produce a predicted block.

Example 25 provides the one or more non-transitory computer-readable media of example 24, where the instructions further cause the one or more processors to: determine a block residual from the encoded bitstream; and apply the block residual to the predicted block to produce a part of a reconstructed frame.

Example 26 provides the one or more non-transitory computer-readable media of example 24 or 25, where the first component of the first decoded vector is a horizontal component of the first decoded vector.

Example 27 provides the one or more non-transitory computer-readable media of any one of examples 24-26, where the second component of the second decoded vector is a vertical component of the second decoded vector.

Example 28 provides the one or more non-transitory computer-readable media of any one of examples 24-27, where the indexed predictor table further includes a fourth index corresponding to a fourth vector predictor having a first component of the second decoded vector and a second component of the first decoded vector.

Example 29 provides the one or more non-transitory computer-readable media of any one of examples 24-28, where the indexed predictor table further includes a fifth index corresponding to a fifth vector predictor having to a third decoded vector of a third decoded block.

Example 30 provides the one or more non-transitory computer-readable media of example 29, where the indexed predictor table further includes a sixth index corresponding to a sixth vector predictor having the first component of the first decoded vector and a second component of the third decoded vector.

Example 31 provides the one or more non-transitory computer-readable media of example 29 or 30, where the indexed predictor table further includes a seventh index corresponding to a seventh vector predictor having a first component of the third decoded vector and a second component of the first decoded vector.

Example 32 provides the one or more non-transitory computer-readable media of any one of examples 29-31, where the indexed predictor table further includes an eighth index corresponding to an eighth vector predictor having a first component of the second decoded vector and a second component of the third decoded vector.

Example 33 provides the one or more non-transitory computer-readable media of any one of examples 29-32, where the indexed predictor table further includes a nineth index corresponding to a nineth vector predictor having a first component of the third decoded vector and a second component of the second decoded vector.

Example 34 provides the one or more non-transitory computer-readable media of any one of examples 24-33, where: the residual vector includes a first component of the residual vector and a second component of the residual vector; the reconstructed vector includes a first component of the reconstructed vector and a second component of the reconstructed vector; and determining the reconstructed vector includes adding the first component of the residual vector and the first component of the first decoded vector to obtain the first component of the reconstructed vector; and adding the second component of the residual vector and the second component of the second decoded vector to obtain the second component of the reconstructed vector.

Example 35 provides one or more non-transitory computer-readable media storing instructions that, when executed by one or more processors, cause the one or more processors to: determine a reference block and a vector for a block to be encoded; determine one or more vector predictor candidates for the block to be encoded; determine a first vector predictor candidate in the one or more vector predictor candidates that has a horizontal component that is closest to a horizontal component of the vector; determine a second vector predictor candidate in the one or more vector predictor candidates that has a vertical component that is closest to a vertical component of the vector, where the second vector predictor candidate is different from the first vector predictor candidate; determine an index in an indexed predictor table that corresponds a third vector predictor candidate, where the third vector predictor candidate corresponds to the horizontal component of the first vector predictor candidate and the vertical component of the second vector predictor candidate; and encode the index for the block to be encoded in an encoded bitstream.

Example 36 provides the one or more non-transitory computer-readable media of example 35, where determining the first vector predictor candidate includes determining horizontal absolute differences between the horizontal component of the vector and a horizontal component of each one of the one or more vector predictor candidates.

Example 37 provides the one or more non-transitory computer-readable media of example 36, where the first vector predictor candidate has a smallest horizontal absolute difference out of the horizontal absolute differences.

Example 38 provides the one or more non-transitory computer-readable media of any one of examples 35-37, where determining the second vector predictor candidate includes determining vertical absolute differences between the vertical component of the vector and a vertical component of each one of the one or more vector predictor candidates.

Example 39 provides the one or more non-transitory computer-readable media of example 38, where the second vector predictor candidate has a smallest vertical absolute difference out of the vertical absolute differences.

Example 40 provides the one or more non-transitory computer-readable media of any one of examples 35-39, where the instructions further cause the one or more processors to: determine a horizontal component of a residual vector based on the vector and the horizontal component of the first vector predictor candidate; and determine a vertical component of the residual vector based on the vector and the vertical component of the second vector predictor candidate.

Example 41 provides the one or more non-transitory computer-readable media of example 40, further including encode the residual vector in the encoded bitstream.

Example 42 provides the one or more non-transitory computer-readable media of example 40 or 41, where a magnitude of the residual vector is smaller than a magnitude of a further residual vector based on the vector and the first vector predictor candidate.

Example 43 provides the one or more non-transitory computer-readable media of any one of examples 40-42, where a magnitude of the residual vector is smaller than a magnitude of a further residual vector based on the vector and the second vector predictor candidate.

Example 44 provides the one or more non-transitory computer-readable media of any one of examples 35-43, where the indexed predictor table includes the first vector predictor candidate, the second vector predictor candidate, and the third vector predictor candidate.

Example 45 provides the one or more non-transitory computer-readable media of any one of examples 35-44, where the first vector predictor candidate corresponds to a vector of a first encoded block in the encoded bitstream.

Example 46 provides the one or more non-transitory computer-readable media of any one of examples 35-45, where the second vector predictor candidate corresponds to a vector of a second encoded block in the encoded bitstream.

Example 47 provides an apparatus, including one or more processors for executing instructions; and one or more non-transitory computer-readable media storing the instructions, the instructions causing the one or more processors to: determine a reference block and a residual vector from an encoded bitstream; determine an indexed predictor table from the encoded bitstream, where the indexed predictor table includes a first index corresponding to a first vector predictor having a first decoded vector of a first decoded block, a second index corresponding to a second vector predictor having a second decoded vector of a second decoded block, and a third index corresponding to a third vector predictor having a first component of the first decoded vector and a second component of the second decoded vector; determine a corresponding vector predictor in the indexed predictor table based on an index of the indexed predictor table signaled in the encoded bitstream; determine a reconstructed vector based on the corresponding vector predictor and the residual vector; and apply the reconstructed vector to the reference block to produce a predicted block.

Example 48 provides the apparatus of example 47, where the instructions further cause the one or more processors to: determine a block residual from the encoded bitstream; and apply the block residual to the predicted block to produce a part of a reconstructed frame.

Example 49 provides the apparatus of example 47 or 48, where the first component of the first decoded vector is a horizontal component of the first decoded vector.

Example 50 provides the apparatus of any one of examples 47-49, where the second component of the second decoded vector is a vertical component of the second decoded vector.

Example 51 provides the apparatus of any one of examples 47-50, where the indexed predictor table further includes a fourth index corresponding to a fourth vector predictor having a first component of the second decoded vector and a second component of the first decoded vector.

Example 52 provides the apparatus of any one of examples 47-51, where the indexed predictor table further includes a fifth index corresponding to a fifth vector predictor having to a third decoded vector of a third decoded block.

Example 53 provides the apparatus of example 52, where the indexed predictor table further includes a sixth index corresponding to a sixth vector predictor having the first component of the first decoded vector and a second component of the third decoded vector.

Example 54 provides the apparatus of example 52 or 53, where the indexed predictor table further includes a seventh index corresponding to a seventh vector predictor having a first component of the third decoded vector and a second component of the first decoded vector.

Example 55 provides the apparatus of any one of examples 52-54, where the indexed predictor table further includes an eighth index corresponding to an eighth vector predictor having a first component of the second decoded vector and a second component of the third decoded vector.

Example 56 provides the apparatus of any one of examples 52-55, where the indexed predictor table further includes a nineth index corresponding to a nineth vector predictor having a first component of the third decoded vector and a second component of the second decoded vector.

Example 57 provides the apparatus of any one of examples 47-56, where: the residual vector includes a first component of the residual vector and a second component of the residual vector; the reconstructed vector includes a first component of the reconstructed vector and a second component of the reconstructed vector; and determining the reconstructed vector includes adding the first component of the residual vector and the first component of the first decoded vector to obtain the first component of the reconstructed vector; and adding the second component of the residual vector and the second component of the second decoded vector to obtain the second component of the reconstructed vector.

Example 58 provides an apparatus, including one or more processors for executing instructions; and one or more non-transitory computer-readable media storing the instructions, the instructions causing the one or more processors to: determine a reference block and a vector for a block to be encoded; determine one or more vector predictor candidates for the block to be encoded; determine a first vector predictor candidate in the one or more vector predictor candidates that has a horizontal component that is closest to a horizontal component of the vector; determine a second vector predictor candidate in the one or more vector predictor candidates that has a vertical component that is closest to a vertical component of the vector, where the second vector predictor candidate is different from the first vector predictor candidate; determine an index in an indexed predictor table that corresponds a third vector predictor candidate, where the third vector predictor candidate corresponds to the horizontal component of the first vector predictor candidate and the vertical component of the second vector predictor candidate; and encode the index for the block to be encoded in an encoded bitstream.

Example 59 provides the apparatus of example 58, where determining the first vector predictor candidate includes determining horizontal absolute differences between the horizontal component of the vector and a horizontal component of each one of the one or more vector predictor candidates.

Example 60 provides the apparatus of example 59, where the first vector predictor candidate has a smallest horizontal absolute difference out of the horizontal absolute differences.

Example 61 provides the apparatus of any one of examples 58-60, where determining the second vector predictor candidate includes determining vertical absolute differences between the vertical component of the vector and a vertical component of each one of the one or more vector predictor candidates.

Example 62 provides the apparatus of example 61, where the second vector predictor candidate has a smallest vertical absolute difference out of the vertical absolute differences.

Example 63 provides the apparatus of any one of examples 58-62, where the instructions further cause the one or more processors to: determine a horizontal component of a residual vector based on the vector and the horizontal component of the first vector predictor candidate; and determine a vertical component of the residual vector based on the vector and the vertical component of the second vector predictor candidate.

Example 64 provides the apparatus of example 63, further including encode the residual vector in the encoded bitstream.

Example 65 provides the apparatus of example 63 or 64, where a magnitude of the residual vector is smaller than a magnitude of a further residual vector based on the vector and the first vector predictor candidate.

Example 66 provides the apparatus of any one of examples 63-65, where a magnitude of the residual vector is smaller than a magnitude of a further residual vector based on the vector and the second vector predictor candidate.

Example 67 provides the apparatus of any one of examples 58-66, where the indexed predictor table includes the first vector predictor candidate, the second vector predictor candidate, and the third vector predictor candidate.

Example 68 provides the apparatus of any one of examples 58-67, where the first vector predictor candidate corresponds to a vector of a first encoded block in the encoded bitstream.

Example 69 provides the apparatus of any one of examples 58-68, where the second vector predictor candidate corresponds to a vector of a second encoded block in the encoded bitstream.

Example A provides an apparatus comprising means to carry out or means for carrying out any one of the methods provided in examples 1-23.

Example B provides one or more non-transitory computer-readable media storing instructions that, when executed by one or more processors, cause the one or more processors to perform any one of the methods provided in examples 1-23 and methods described herein.

Example C provides an apparatus, comprising: one or more processors to execute instructions, and one or more non-transitory computer-readable media storing the instructions that, when executed by one or more processors, cause the one or more processors to perform any one of the methods provided in examples 1-23 and methods described herein.

Example D provides an encoder to generate an encoded bitstream using operations described herein.

Example E provides an encoder to perform any one of the methods provided in examples 12-23.

Example F provides a decoder to decode an encoded bitstream using operations described herein.

Example H provides a decoder to perform any one of the methods provided in examples 1-11.

### Variations and other notes

Although the operations of the example method shown in and described with reference to FIGS. 5-6 and 10-12 are illustrated as occurring once each and in a particular order, it will be recognized that the operations may be performed in any suitable order and repeated as desired. Additionally, one or more operations may be performed in parallel. Furthermore, the operations illustrated in FIGS. 5-6 and 10-12 may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:
determining a reference block and a residual vector from an encoded bitstream;
determining an indexed predictor table from the encoded bitstream, wherein the indexed predictor table comprises a first index corresponding to a first vector predictor having a first decoded vector of a first decoded block, a second index corresponding to a second vector predictor having a second decoded vector of a second decoded block, and a third index corresponding to a third vector predictor having a first component of the first decoded vector and a second component of the second decoded vector;
determining a corresponding vector predictor in the indexed predictor table based on an index of the indexed predictor table signaled in the encoded bitstream;
determining a reconstructed vector based on the corresponding vector predictor and the residual vector; and
applying the reconstructed vector to the reference block to produce a predicted block.

2. The method of claim 1, further comprising:
determining a block residual from the encoded bitstream; and
applying the block residual to the predicted block to produce a part of a reconstructed frame.

3. The method of claim 1 or 2, wherein the first component of the first decoded vector is a horizontal component of the first decoded vector.

4. The method of any one of claims 1-3, wherein the second component of the second decoded vector is a vertical component of the second decoded vector.

5. The method of any one of claims 1-4, wherein the indexed predictor table further comprises:
a fourth index corresponding to a fourth vector predictor having a first component of the second decoded vector and a second component of the first decoded vector.

6. The method of any one of claims 1-5, wherein the indexed predictor table further comprises:
a fifth index corresponding to a fifth vector predictor having to a third decoded vector of a third decoded block.

7. The method of claim 6, wherein the indexed predictor table further comprises:
a sixth index corresponding to a sixth vector predictor having the first component of the first decoded vector and a second component of the third decoded vector.

8. The method of claim 6 or 7, wherein the indexed predictor table further comprises:
a seventh index corresponding to a seventh vector predictor having a first component of the third decoded vector and a second component of the first decoded vector.

9. The method of any one of claims 6-8, wherein the indexed predictor table further comprises:
an eighth index corresponding to an eighth vector predictor having a first component of the second decoded vector and a second component of the third decoded vector.

10. The method of any one of claims 6-9, wherein the indexed predictor table further comprises:
a nineth index corresponding to a nineth vector predictor having a first component of the third decoded vector and a second component of the second decoded vector.

11. The method of claim 1, wherein:
the residual vector comprises a first component of the residual vector and a second component of the residual vector;
the reconstructed vector comprises a first component of the reconstructed vector and a second component of the reconstructed vector; and
determining the reconstructed vector comprises:
adding the first component of the residual vector and the first component of the first decoded vector to obtain the first component of the reconstructed vector; and
adding the second component of the residual vector and the second component of the second decoded vector to obtain the second component of the reconstructed vector.

12. One or more non-transitory computer-readable media storing instructions that, when executed by one or more processors, cause the one or more processors to perform a method according to any one of claims 1-11.

13. An apparatus, comprising:
one or more processors for executing instructions; and
one or more non-transitory computer-readable media storing the instructions, the instructions causing the one or more processors to perform a method according to any one of claims 1-11.
